# EUROPEAN PATENT SPECIFICATION

(11) **EP 4 507 449 B1**
(45) Date of publication and mention of the grant of the patent: **06.05.2026**
(21) Application number: 23810723.9
(22) Date of filing: 21.04.2023
(51) Int. Cl.: H04W 76/27, H04W 24/02, H04W 76/19, H04W 24/10, H04L 41/08

(54) **NETWORK CONFIGURATION METHOD, USER EQUIPMENT, NETWORK DEVICE AND COMPUTER STORAGE MEDIUM**
NETZWERKKONFIGURATIONSVERFAHREN, BENUTZERGERÄT, NETZWERKVORRICHTUNG UND COMPUTERSPEICHERMEDIUM
PROCÉDÉ DE CONFIGURATION DE RÉSEAU, ÉQUIPEMENT UTILISATEUR, DISPOSITIF DE RÉSEAU ET SUPPORT DE STOCKAGE INFORMATIQUE

(30) Priority: 24.05.2022 CN 202210576120
(43) Date of publication of application: 12.02.2025
(73) Proprietor: Honor Device Co., Ltd., Shenzhen, Guangdong 518040 (CN)
(72) Inventor: ZHANG, Jian, Shenzhen, Guangdong 518040 (CN); ZHANG, Jian, Shenzhen, Guangdong 518040 (CN)
(74) Representative: Isarpatent
(86) International application number: PCT/CN2023/089730
(87) International publication number: WO 2023/226649

(56) References cited:
- EP-A1- 4 418 733
- EP-A1- 4 444 019
- WO-A1-2021/163394
- WO-A1-2021/260256
- WO-A1-2022/087275
- CN-A- 111 417 217
- CN-A- 111 526 550
- CN-A- 112 040 567
- US-A1- 2021 120 447

## Description

### CROSS-REFERENCE TO RELATED APPLICATIONS

Priority is claimed to Chinese Patent Application No. 202210576120.0, filed with the China National Intellectual Property Administration on May 24, 2022 and entitled "NETWORK CONFIGURATION METHOD, USER EQUIPMENT, NETWORK DEVICE, AND COMPUTER STORAGE MEDIUM".

### TECHNICAL FIELD

This disclosure generally relates to the field of communication technologies, and the invention specifically, relates to a network configuration method, a network device, and a computer storage medium.

### BACKGROUND

In a fifth generation (5th-Generation, 5G) new radio (NR) network, to improve efficiency of frequent transmission of small data packets, a radio resource control (RRC) state is introduced: an RRC inactive state. When a network device sends, to a user equipment (UE) in an RRC connected state, an RRC release message that carries a suspend configuration, the network device is used to indicate the UE to enter the RRC inactive state. When the UE is in the RRC inactive state, a UE context is suspended on both a UE side and a network device side. In this way, when the UE needs to send data/signaling, the UE may first send an RRC resume request message to the network device, so that the UE switches from the RRC inactive state to the RRC `connected state, and then the UE may send the data/signaling to the network device. Before the UE sends the data/signaling to the network device, the network device needs to perform network configuration. However, in a network configuration process, the UE needs to switch from the RRC inactive state to the RRC connected state to report a measurement result during the RRC inactive state or an RRC idle state. Consequently, the network device cannot rapidly perform network configuration, and a transient throughput of the UE cannot reach a peak value. This affects an initial transmission rate of a data transmission service, and degrades user experience.

EP 4 444 019 A1 discloses a communication method and provides a processing scheme for whether to perform anchor migration when small data transmission (SDT) is performed.

EP 4 418 733 A1 discloses a data transmission method and provides a processing solution used when a serving base station or an anchor base station does not meet a small data transmission (SDT) requirement.

WO 2021/163394 A1 discloses methods and apparatuses related to small data transmission (SDT).

### SUMMARY

The object of the invention is to provide a network configuration method, a network device, and a computer storage medium, to improve network configuration efficiency of a network device, and improve an initial transmission rate of a data transmission service, thereby improving user experience. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

According to a first aspect of this disclosure, where the first aspect and its implementations and options described below are not claimed, a network configuration method is provided, and is applied to user equipment. The user equipment is in a radio resource control (RRC) inactive state. The network configuration method includes: obtaining a measurement result for a camped cell; determining that the measurement result is valid; and sending an RRC connection message to a serving base station, where the RRC connection message is used to request to set up an RRC connection between the user equipment and the serving base station. The RRC connection message carries a measurement configuration parameter, and the measurement configuration parameter is used to indicate the serving base station to complete network configuration.

According to this technical solution, the user equipment in the RRC inactive state may first determine whether a measurement result of the user equipment during the RRC inactive state or an idle state is valid. If the user equipment determines that the measurement result is valid, the user equipment sends the RRC connection message to the serving base station. The RRC connection message carries the measurement configuration parameter. Then, the serving base station may complete network configuration according to the measurement configuration parameter. The user equipment can report a valid measurement result during the RRC inactive state, and report the measurement result without needing to switch to an RRC connected state, so that a requirement that the serving base station rapidly performs network configuration can be met.

In an implementation, the sending an RRC connection message to a serving base station includes: sending the RRC connection message to the serving base station in a small data transmission (SDT) mode.

According to this technical solution, the user equipment transmits uplink data or signaling in the SDT mode during the RRC inactive state, and does not need to frequently switch an RRC state of the user equipment, to reduce signaling overheads caused by state switching of the user equipment, reduce a service delay, and improve network configuration efficiency.

In another implementation, the measurement configuration parameter includes a valid identifier of the measurement result or the measurement result, and the valid identifier of the measurement result is used to notify the serving base station that the measurement result is valid.

In another implementation, the RRC connection message includes any one of the following: an RRC resume request message, an RRC setup request message, an RRC reestablishment request message, an RRC resume complete message, an RRC setup complete message, and an RRC reestablishment complete message.

In another implementation, before the obtaining a measurement result for a camped cell, the network configuration method further includes: sending an RRC resume request message to the serving base station, where the RRC resume request message is used to request to set up an SDT session; and receiving an RRC release message from the serving base station, where the RRC release message is used to indicate to terminate the SDT session. The RRC release message carries first configuration information, the first configuration information is used to configure a measurement report, and the measurement report is used to indicate the user equipment to obtain the measurement result for the camped cell.

According to this technical solution, before the user equipment obtains the measurement result for the camped cell, the serving base station sends the RRC release message to the user equipment. The RRC release message carries the first configuration information, to indicate the user equipment to measure the camped cell based on the first configuration information.

In another implementation, the first configuration information includes any one of the following information: a measurement report parameter, first indication information, and second indication information. The measurement report parameter includes a measurement result for each cell in a cell list. The first indication information is used to indicate the user equipment to send the RRC connection message that carries the valid identifier of the measurement result. The second indication information is used to indicate the user equipment to report the measurement result for the camped cell.

In another implementation, the RRC release message or the RRC connection message further carries a measurement report threshold, and the measurement report threshold is used to indicate whether the user equipment reports the measurement result.

In another implementation, the sending an RRC connection message to a serving base station includes: sending an RRC resume request message to the serving base station, where the RRC resume request message is used to request to set up an SDT session. The RRC resume request message carries a valid identifier of a measurement result. After the sending, by the serving base station, an RRC resume request message, the network configuration method further includes: receiving a measurement report request from the serving base station, where the measurement report request is used to request the user equipment to report the measurement result; sending the measurement result to the serving base station, where the measurement result is used to indicate the serving base station to complete network configuration; and receiving an RRC release message from the serving base station, where the RRC release message is used to indicate to terminate the SDT session. The RRC release message carries first configuration information and second configuration information, the first configuration information is used to configure a measurement report, and the second configuration information is used to configure a cell redirection and/or reselection parameter.

In another implementation, the sending an RRC connection message to a serving base station includes: sending an RRC resume request message to the serving base station, where the RRC resume request message is used to request to set up an SDT session. The RRC resume request message carries the measurement result, and the measurement result is used to indicate the serving base station to complete network configuration. After the sending, by the serving base station, an RRC resume request message, the network configuration method further includes: receiving an RRC resume message from the serving base station, where the RRC resume message is used to indicate the user equipment to switch to an RRC connected state. The RRC resume message carries third indication information, and the third indication information is used to indicate a reason for the user equipment to switch to the RRC connected state.

In another implementation, the sending an RRC connection message to a serving base station includes: sending an RRC setup request message to the serving base station, where the RRC setup request message is used to request to set up an RRC connection. The RRC setup request message carries a valid identifier of a measurement result. After the sending an RRC setup request message to the serving base station, the network configuration method further includes: receiving an RRC setup message from the serving base station, where the RRC setup message is used to notify the user equipment that the RRC connection is allowed to be set up, the RRC setup message carries a measurement report request, and the measurement report request is used to request the user equipment to report the measurement result; and sending an RRC setup complete message to the serving base station, where the RRC setup complete message is used to notify the serving base station that the RRC connection is set up. The RRC setup complete message carries the measurement result, and the measurement result is used to indicate the serving base station to complete network configuration.

According to a second aspect of this invention, a network configuration method is provided, and is applied to a serving base station. The network configuration method includes: receiving an RRC connection message from user equipment, where the user equipment is in a radio resource control (RRC) inactive state, the RRC connection message is used to request to set up an RRC connection between the user equipment and the serving base station, the RRC connection message carries a measurement configuration parameter, and the measurement configuration parameter is used to indicate the serving base station to complete network configuration; and completing network configuration according to the measurement configuration parameter.

According to this technical solution, when the user equipment is in the RRC inactive state, the serving base station receives the RRC connection message from the user equipment. The RRC connection message carries the measurement configuration parameter. Then, the serving base station may complete network configuration according to the measurement configuration parameter. The user equipment can report a valid measurement result during the RRC inactive state, and report the measurement result without needing to switch to an RRC connected state, so that a requirement that the serving base station rapidly performs network configuration can be met.

It may be understood that the network configuration method provided in the second aspect of this invention is applied to the serving base station, and is approximately the same as the network configuration method provided in the first aspect of this invention.

It should be noted that the network configuration method provided in the second aspect of this invention is applied to a scenario in which the serving base station and an anchor base station are a same base station. In other words, the user equipment transmits uplink data or signaling to a core network through the serving base station.

According to a third aspect of this invention, a network configuration method is provided, and is applied to a serving base station. The network configuration method includes: receiving an RRC connection message from user equipment, where the user equipment is in a radio resource control RRC inactive state, the RRC connection message is used to request to set up an RRC connection between the user equipment and the serving base station, the RRC connection message carries a measurement configuration parameter, and the measurement configuration parameter is used to indicate the serving base station or an anchor base station to complete network configuration; sending a user equipment context retrieve request message to the anchor base station, where the user equipment context retrieve request message is used to request a user equipment context; if the anchor base station determines to migrate the user equipment context, receiving a user equipment context retrieve response message from the anchor base station, where the user equipment context retrieve response message carries the user equipment context; and completing network configuration according to the measurement configuration parameter, or sending the measurement configuration parameter to the anchor base station.

According to this technical solution, when the user equipment determines that a measurement result is valid, the user equipment sends the RRC connection message to the serving base station. The RRC connection message carries the measurement configuration parameter. Then, the serving base station sends the user equipment context retrieve request message to the anchor base station, to request to obtain the user equipment context from the anchor base station. After receiving the user equipment context retrieve request message, the anchor base station determines whether to migrate the user equipment context. If the anchor base station determines to migrate the user equipment context, the anchor base station sends the user equipment context retrieve response message to the serving base station. The user equipment context retrieve response message carries the user equipment context. Then, the serving base station may complete network configuration according to the measurement configuration parameter, or send the measurement configuration parameter to the anchor base station, and then the anchor base station completes network configuration. The user equipment can report a valid measurement result during the RRC inactive state, and report the measurement result without needing to switch to an RRC connected state. After receiving the user equipment context, the serving base station completes network configuration, or the anchor base station completes network configuration. A requirement that the serving base station or the anchor base station rapidly performs network configuration can be met.

In an implementation, the user equipment context retrieve request message carries fourth indication information, and the fourth indication message is used to indicate that a measurement result of the user equipment is valid. The user equipment context retrieve response message further carries a measurement report request, and the measurement report request is used to request the user equipment to report the measurement result.

In another implementation, the receiving an RRC connection message from user equipment includes: receiving an RRC resume request message from the user equipment, where the RRC resume request message is used to request to set up an SDT session. The RRC resume request message carries a valid identifier of the measurement result. After the receiving an RRC resume request message from the user equipment, the network configuration method further includes: sending an RRC release message to the user equipment, where the RRC release message is used to indicate to terminate the SDT session. The RRC release message carries first configuration information and second configuration information, the first configuration information is used to configure a measurement report, and the second configuration information is used to configure a cell redirection and/or reselection parameter.

In another implementation, the receiving an RRC connection message from user equipment includes: receiving an RRC resume request message from the user equipment, where the RRC resume request message is used to request to set up an SDT session. The RRC resume request message carries a measurement result. After the receiving an RRC resume request message from the user equipment, the network configuration method further includes: sending an RRC resume message to the user equipment, where the RRC resume message is used to indicate the user equipment to switch to an RRC connected state. The RRC resume message carries third indication information, and the third indication information is used to indicate a reason for the user equipment to switch to the RRC connected state.

In another implementation, the receiving an RRC connection message from user equipment includes: receiving an RRC resume request message from the user equipment, where the RRC resume request message is used to request to set up an SDT session. The RRC resume request message carries a valid identifier of the measurement result. After the receiving an RRC resume request message from the user equipment, the network configuration method further includes: sending an RRC resume message to the user equipment, where the RRC resume message is used to indicate the user equipment to switch to an RRC connected state; and receiving an RRC resume complete message from the user equipment, where the RRC resume complete message is used to notify the serving base station that the user equipment has switched to the RRC connected state. The RRC resume complete message carries the measurement result, and the measurement result is used to indicate the serving base station to complete network configuration.

In another implementation, the network configuration method further includes: if the anchor base station determines not to migrate the user equipment context, receiving a user equipment context retrieve failure message from the anchor base station, where the user equipment context retrieve failure message is used to notify the serving base station that all the user equipment context fails to be obtained, the user equipment context retrieve failure message carries a partial user equipment contexts and a measurement report request, and the measurement report request is used to request the user equipment to report the measurement result; sending the measurement report request to the user equipment; receiving the measurement result from the user equipment; and sending the measurement result to the anchor base station, where the measurement result is used to indicate the anchor base station to complete network configuration.

According to a fourth aspect of this invention, a network configuration method is provided, and is applied to an anchor base station. The network configuration method includes: receiving a user equipment context retrieve request message from a serving base station, where the user equipment context retrieve request message is used to request a user equipment context, the user equipment context retrieve request message carries fourth indication information, the fourth indication message is used to indicate that a measurement result of user equipment is valid, and the user equipment is in a radio resource control RRC inactive state; determining whether to migrate the user equipment context; sending a user equipment context retrieve response message to the serving base station if it is determined to migrate the user equipment context, where the user equipment context retrieve response message carries the user equipment context and a measurement report request, and the measurement report request is used to request the user equipment to report the measurement result; receiving the measurement result from the serving base station; and completing network configuration according to the measurement result.

According to this technical solution, when the user equipment determines that the measurement result is valid, after receiving the user equipment context retrieve request message, the anchor base station determines whether to migrate the user equipment context. If the anchor base station determines to migrate the user equipment context, the anchor base station sends the user equipment context retrieve response message to the serving base station. The user equipment context retrieve response message carries the user equipment context and the measurement report request. Then, the serving base station transparently forwards the measurement report request to the user equipment. Then, the serving base station receives the measurement result from the user equipment, and then transparently forwards the measurement result to the anchor base station. Finally, the anchor base station completes network configuration. The user equipment can report a valid measurement result during the RRC inactive state, and report the measurement result without needing to switch to an RRC connected state. The anchor base station completes network configuration according to the measurement result received from the serving base station, so that a requirement that the anchor base station rapidly performs network configuration can be met.

In an implementation, the network configuration method further includes: if it is determined not to migrate the user equipment context, sending a user equipment context retrieve failure message to the serving base station, where the user equipment context retrieve failure message is used to notify the serving base station that all the user equipment context fails to be obtained, the user equipment context retrieve failure message carries a partial user equipment context and a measurement report request, and the measurement report request is used to request the user equipment to report the measurement result; receiving the measurement result from the serving base station; and completing network configuration according to the measurement result.

It may be understood that the network configuration method provided in the fourth aspect of this invention is applied to the anchor base station, and is approximately the same as the network configuration method provided in the third aspect of this invention.

It should be noted that the network configuration methods provided in the third aspect and the fourth aspect of this invention are applied to a scenario in which the serving base station and the anchor base station are different base stations. In other words, the user equipment transmits uplink data or signaling to a core network sequentially through the serving base station and the anchor base station.

According to a fifth aspect of this disclosure, where the fifth aspect and its implementations and options described below are not claimed, user equipment is provided. The user equipment includes a memory and a processor, and the processor is configured to call a computer program or code stored in the memory, to perform the network configuration method according to the first aspect.

According to a sixth aspect of this invention, a network device is provided. The network device includes a memory and a processor, and the processor is configured to call a computer program or code stored in the memory, to perform the network configuration methods according to the second aspect to the fourth aspect.

It may be understood that the network device may be a serving base station, or may be an anchor base station. When the network device is the serving base station, the network configuration method provided in the second aspect and the third aspect of this invention may be performed. When the network device is the anchor base station, the network configuration method provided in the fourth aspect of this invention may be performed.

According to a seventh aspect of this invention, a computer storage medium is provided, and is configured to store a computer program or instructions, and when the computer program or instructions are executed by a processor, the network configuration method in embodiments of this invention is implemented.

It may be understood that for specific implementations and technical effects of the user equipment, the network device, and the computer storage medium provided in the fifth aspect to the seventh aspect of this invention, reference may be made to the network configuration method provided in the first aspect to the fourth aspect of this invention, and details are not described herein again.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

### BRIEF DESCRIPTION OF DRAWINGS

FIG. 1 is a diagram of a 5G network architecture;
FIG. 2 is a diagram of an information exchange scenario in which user equipment migrates from an RRC inactive state to an RRC connected state in an example;
FIG. 3 is a diagram of an information exchange scenario in which a network device sends an RRC release message to user equipment;
FIG. 4 is a diagram of an information exchange scenario in which user equipment transmits uplink data in an example;
FIG. 5 is a diagram of an information exchange scenario in which user equipment transmits uplink data in another example;
FIG. 6 is a diagram of an information exchange scenario of a network configuration method in Scenario 1;
FIG. 7 is a diagram of an information exchange scenario of a network configuration method in Scenario 2;
FIG. 8 is a diagram of an information exchange scenario of another network configuration method in Scenario 1;
FIG. 9 is a diagram of an information exchange scenario of another network configuration method in Scenario 1;
FIG. 10 is a diagram of an information exchange scenario of another network configuration method in Scenario 1;
FIG. 11 is a diagram of an information exchange scenario of another network configuration method in Scenario 1;
FIG. 12 is a diagram of an information exchange scenario of another network configuration method in Scenario 2;
FIG. 13 is a diagram of an information exchange scenario of another network configuration method in Scenario 2;
FIG. 14 is a diagram of an information exchange scenario of another network configuration method in Scenario 2;
FIG. 15 is a diagram of an information exchange scenario of another network configuration method in Scenario 2;
FIG. 16 is a diagram of a structure of a network device according to an embodiment of this application;
FIG. 17 is a diagram of a structure of a network device according to another embodiment of this application; and
FIG. 18 is a diagram of a structure of user equipment according to an embodiment of this application.

### DESCRIPTION OF EMBODIMENTS

It should be noted that in embodiments of this application, "at least one" means one or more, and "a plurality of" means two or more. "And/or" describes an association relationship between associated objects and represents that three relationships may exist. For example, A and/or B may represent the following three cases: only A exists, both A and B exist, and only B exists, where A and B may be singular or plural. The terms such as "first", "second", "third", and "fourth" (if any) in the specification and claims of this application and in the accompanying drawings are used for distinguishing similar objects and not necessarily used for describing any particular order or sequence.

In addition, it should be noted that the method disclosed in embodiments of this application or the method shown in the flowchart includes one or more steps used to implement the method. Without departing from the scope of the claims, execution sequences of a plurality of steps may be interchanged with each other, and some steps may also be deleted.

The following first describes some terms in embodiments of this application, for ease of understanding by a person skilled in the art.

### 1. User equipment (User Equipment, UE)

User equipment may also be referred to as a mobile terminal (Mobile Terminal), mobile user equipment, or the like, and may communicate with one or more core networks through a radio access network (Radio Access Network, RAN).

### 2. Network device

A network device is a device deployed in a radio access network to provide a wireless communication function for user equipment. The network device may include a base station, and the base station may include a macro base station, a micro base station, a relay station, an access point base station controller, a transmission reception point (Transmission Reception Point, TRP), or the like. In different networks, specific names of the base station are different. For example, in a long term evolution (Long Term Evolution, LTE) network, the base station is referred to as an evolved NodeB (Evolved NodeB, eNB), and in a subsequent evolved system, the base station may also be referred to as a new radio NodeB (New Radio NodeB, gNB). In this specification, the base station may serve as a serving base station (Serving gNB) and/or an anchor base station (Anchor gNB). The serving base station is a base station currently serving the user equipment, and the anchor base station is a base station that serves the user equipment last time.

### 3. Core network (Core Network, CN)

User equipment performs data transmission with a core network through a network device, for example, performs data transmission with an access and mobility management function (Access and Mobility Management Function, AMF) or a user plane function (User Plane Function, UPF) of the core network.

### 4. Radio resource control (Radio Resource Control, RRC) state

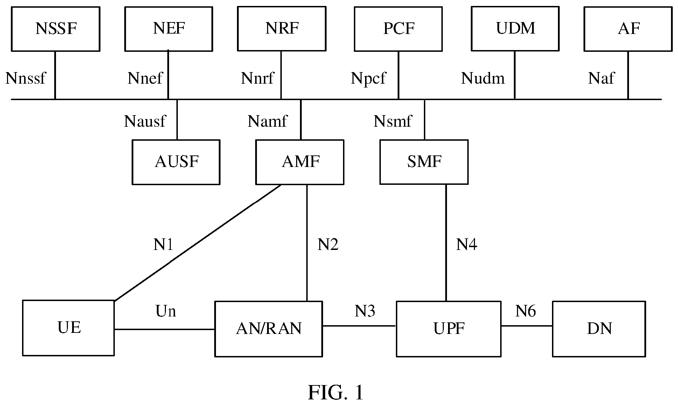

In FIG. 1, a network service architecture of a 5G system is used as an example to show an interaction relationship between network functions and entities and corresponding interfaces.

Refer to FIG. 1. In a 5G network architecture (service-based architecture, SBA), network functions and entities mainly include: user equipment (UE), an access network (access network, AN) or a radio access network (RAN), a user plane function (UPF), a data network (data network, DN), an access and mobility management function (AMF), a session management function (session management function, SMF), an authentication server function (authentication server function, AUSF), a policy control function (policy control function, PCF), an application function (application function, AF), a network slice selection function (network slice selection function, NSSF), unified data management (unified data management, UDM), a network exposure function (network exposure function, NEF), and a network repository function (network repository function, NRF).

A network function can be used as a network element running on dedicated hardware, a software instance running on dedicated hardware, or a virtual function instantiated on an appropriate platform, for example, implemented on cloud infrastructure.

Main functions of a part of the network elements are described below in detail.

AN/RAN: An AN/RAN may include various forms of network devices. The AN/RAN is mainly responsible for functions such as radio resource management on an air interface side, uplink and downlink data classification, quality of service (quality of service, Qos) management, data compression and encryption, completion of signaling processing with a control plane network element, or completion of data forwarding with a user plane function network element. The specific form and structure of the AN/RAN are not limited in the embodiments of the present application.

UPF: A UPF is mainly responsible for packet routing and forwarding, QoS processing of user plane data, charging information statistics, and the like. A transmission resource and a scheduling function for providing a service for UE in the UPF are managed and controlled by an SMF.

DN: A DN is a network for transmitting data. For example, the DU may be an operator service network, internet access, or a third-party service network.

In the 5G network shown in FIG. 1, user equipment has three RRC states: an RRC connected state, an RRC idle state, and an RRC inactive state. The three RRC states may be converted to each other. In this specification, conversion between the three RRC states may alternatively be referred to as "state switching" or "state migration".

The RRC connected (Connected) state may alternatively be referred to as a connected state for short. In this specification, "connected state" and "RRC connected state" are the same concepts. When the user equipment is in the connected state, the user equipment sets up an RRC connection to a network, and may transmit data.

The RRC idle (Idle) state may alternatively be referred to as an idle state for short. In this specification, "idle state" and "RRC idle state" are the same concepts. When the user equipment is in the idle state, the user equipment does not set up an RRC connection to a network, and a base station does not store a context (Context) of the user equipment. If the user equipment needs to enter the RRC connected state from the RRC idle state, the user equipment needs to initiate an RRC connection setup procedure.

The RRC inactive (Inactive) state may alternatively be referred to as an inactive state for short. In this specification, "inactive state" and "RRC inactive state" are the same concepts. When the user equipment is in the inactive state, the user equipment enters the RRC connected state at the anchor base station before. Then, the anchor base station releases the RRC connection, but the anchor base station saves a context of the user equipment. If the user equipment needs to enter the RRC connected state again from the RRC inactive state, the user equipment needs to initiate an RRC connection resume procedure, or referred to as an RRC connection reestablishment procedure at a serving base station. Because the user equipment may be moving, the serving base station and the anchor base station may be a same base station, or may be different base stations.

### 5. User equipment context (UE Context)

In a communication process between user equipment and a network device, the network device creates a record for the user equipment, which is referred to as a user equipment context (UE Context). The user equipment context is used to store device information of the user equipment, such as a mobile number, a device number, an IP address, and a quality of service (Quality of Service, QoS) parameter. The user equipment context is used to maintain a communication connection with the user equipment and process a service of the user equipment in a communication process. In this specification, "user equipment context (UE Context)" is referred to as "context (Context)" for short.

### 6. Xn interface

An Xn interface is an interface for data transmission between two base stations. For example, a serving base station and an anchor base station transmit data to each other through the Xn interface. A user plane interface Xn-U mainly provides a data forwarding function and a traffic control function. A control plane interface Xn-C mainly provides an Xn interface management function, a UE mobility management function, and a dual connection implementation function.

### 7. NG interface

An NG interface is an interface for data transmission between a radio access network and a core network. A user plane interface NG-U is an interface between the radio access network and a user plane function (UPF) of the core network. A control plane interface NG-C is an interface between the radio access network and a control plane function (AMF) of the core network.

### 8. Carrier aggregation (Carrier aggregation, CA)

Carrier aggregation means that one user equipment simultaneously uses spectrum resources of a plurality of serving cells for data transmission. CA is configured by a network (Network, NW). The network selects a cell whose signal quality meets a specific condition based on a measurement report result of the user equipment for a neighboring cell, and configures the cell as a serving cell of the user equipment.

### 9. Dual connectivity (Dual Connectivity, DC)

Dual connectivity means that one user equipment is connected to two base stations at the same time. That is, a plurality of serving cells configured by a network for one user equipment belong to two base stations.

### 10. Secondary cell (Secondary Cell, SCell)

A secondary cell is a cell that works on a secondary frequency band. Once an RRC connection is set up, the secondary cell may be configured to provide additional radio resources.

### 11. Small data transmission (Small Data Transmission, SDT)

In embodiments of this application, a data packet whose data amount is less than a preset data amount threshold may be referred to as a small data packet. In a conventional communication network, user equipment in an idle state or an inactive state needs to first transmit and respond with a plurality of pieces of control signaling to a base station, to enter a connected state, and then can exchange data or signaling with the base station. In a communication network such as machine type communication (Machine Type Communication, MTC), the user equipment frequently sends some small data packets to the base station. This causes the user equipment in the idle state or the inactive state to frequently switch to the connected state, resulting in a large quantity of signaling overheads, and a resource waste of the communication network.

In this case, currently, there is a mode in which the user equipment can transmit data without entering the connected state, that is, a small data transmission (SDT) mode. The small data transmission mode means that after determining that a to-be-transmitted data packet is a small data packet, the user equipment integrates the small data packet into some control signaling, and then transmits the small data packet to the base station by using the control signaling. Alternatively, the user equipment transmits the small data packet to the base station by using a context stored in the user equipment. The small data transmission may include an early data transmission (Early Data Transmission, EDT) mode, a two-step random access mode, a pre-configured uplink resource (Pre-Configured Uplink Resource, PUR) mode, and the like.

### 12. Mobile originating-small data transmission (Mobile Originating-Small Data Transmission, MO-SDT)

Mobile originating-small data transmission, or referred to as mobile calling small data transmission, is a mode in which user equipment initiates small data transmission. When sending uplink data and/or signaling to a network device in the MO-SDT manner, the user equipment may perform small data transmission in an RRC inactive state, to reduce signaling overheads and UE power consumption.

### 13. User equipment context (UE Context)

In a communication process between user equipment and a network device, the network device creates a record for the user equipment, which is referred to as a user equipment context (UE Context).

The user equipment context is used to store device information of the user equipment, such as a mobile number, a device number, an IP address, and a quality of service (Quality of Service, Qos) parameter. The user equipment context is used to maintain a communication connection with the user equipment and process a service of the user equipment in a communication process. In this specification, "user equipment context (UE Context)" is referred to as "context (Context)" for short.

It may be understood that there are an RRC connected state and an RRC idle state in a 5G new radio (New Radio, NR) network. To improve efficiency of frequent transmission of small data packets, an RRC inactive state is introduced to the 5G NR network.

For example, a base station sends, to user equipment (UE) in the RRC connected state, an RRC release (RRC Release) message that carries a suspend (Suspend) configuration, to indicate the UE to enter the RRC inactive state. When the UE is in the RRC inactive state, a UE context (UE Context) is suspended on both a terminal side and a base station side. When the UE needs to send data/signaling, the UE triggers an RRC resume request (RRC Resume Request) procedure, so that the UE resumes from the RRC inactive state to the RRC connected state and then can send the data/signaling.

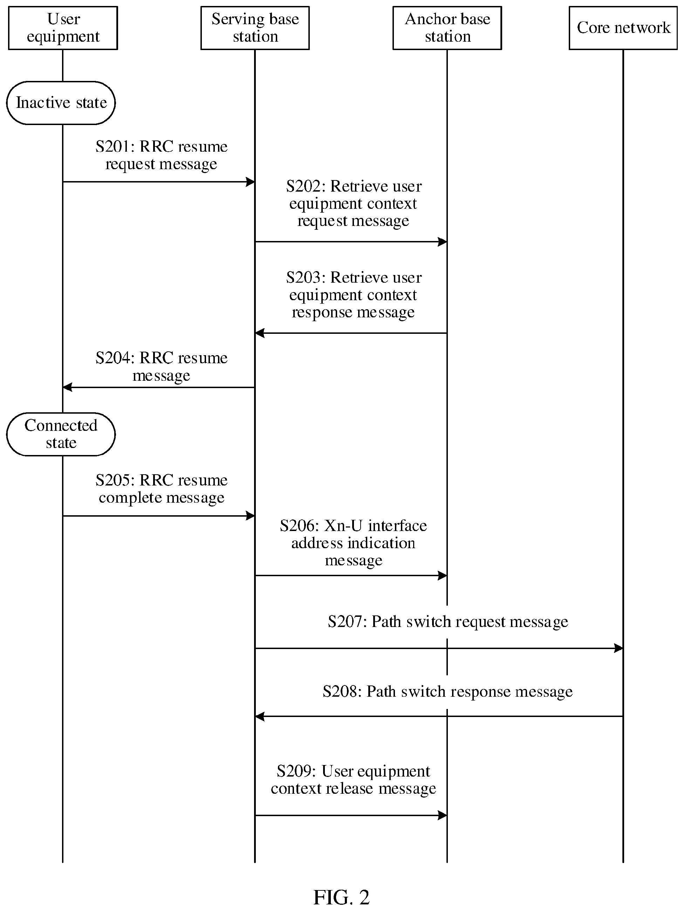

For example, FIG. 2 is a diagram of an information exchange scenario in which the UE migrates from the RRC inactive state to the RRC connected state when the UE needs to send data and/or signaling.

As shown in FIG. 2, it may be understood that when the UE is in the RRC inactive state, if the UE needs to send data/signaling, the user equipment (UE) sends an RRC resume request (RRC Resume Request) message to a serving base station, to request to switch to the RRC connected state (refer to S201).

The serving base station sends a retrieve user equipment context request (Retrieve UE Context Request) message to an anchor base station (refer to S202), to obtain a user equipment context (UE Context).

The anchor base station sends a retrieve user equipment context response (Retrieve UE Context Response) message to the serving base station in response to the retrieve user equipment context request message (refer to S203). The user equipment context response message carries the user equipment context.

After obtaining the context, the serving base station sends an RRC resume (RRC Resume) message to the user equipment (refer to S204), to indicate the user equipment to switch to the RRC connected state.

After switching from the RRC inactive state to the RRC connected state, the user equipment sends an RRC resume complete (RRC Resume Complete) message to the serving base station (refer to S205), to notify the serving base station that the user equipment has switched to the RRC connected state.

The serving base station sends an Xn-U interface address indication (Xn-U Address Indication) message to the anchor base station (refer to S206). The Xn-U interface address indication message carries a data forwarding address. The serving base station provides the data forwarding address for the anchor base station, to prevent a loss of downlink data cached in the anchor base station during data transmission.

The serving base station sends a path switch request (Path Switch Request) message to a core network (for example, an AMF) (refer to S207), to request to switch a downlink endpoint of an NG interface transport bearer to a new endpoint.

In response to the path switch request, the core network sends a path switch response (Path Switch Response) message to the serving base station (refer to S208), to notify the serving base station that the downlink endpoint of the NG interface transmission bearer has been switched to the new termination point.

Finally, the serving base station sends a user equipment context release (UE Context Release) message to the anchor base station (refer to S209), to indicate the anchor base station to release a cached context.

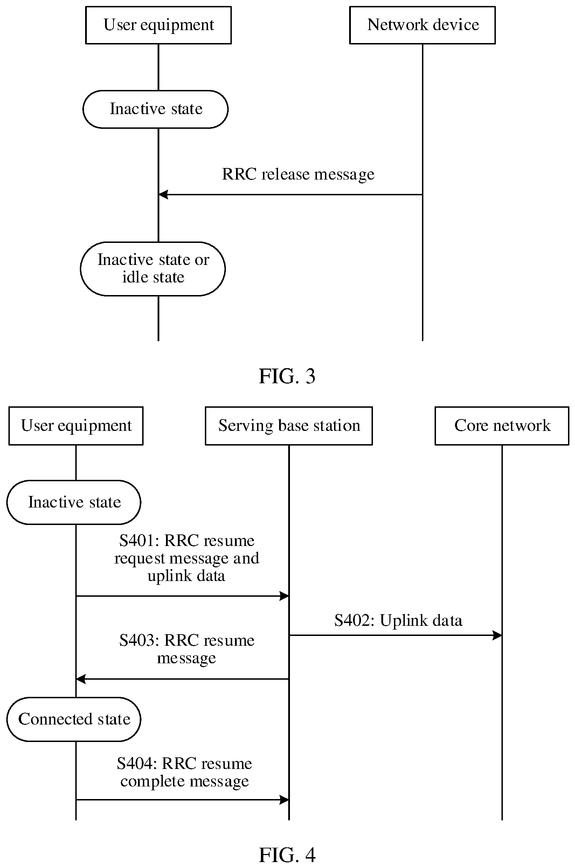

For another example, FIG. 3 is a schematic diagram of an information exchange scenario in which a network device sends an RRC release (RRC Release) message to user equipment (UE).

As shown in FIG. 3, corresponding to step S201 shown in FIG. 2, if the network device (for example, an anchor base station or a serving base station) determines that the user equipment does not need to switch to an RRC connected state, the network device may trigger an RRC release (RRC Release) message, to indicate the user equipment to enter an RRC inactive state or an RRC idle state.

For another example, FIG. 4 is a diagram of an information exchange scenario in which user equipment transmits uplink data in an example. It may be understood that if the user equipment needs to transmit the uplink data, the user equipment may transmit the uplink data together when triggering an RRC resume request (RRC Resume Request) message.

Specifically, as shown in FIG. 4, first, the user equipment in an RRC inactive state sends the RRC resume request (RRC Resume Request) message and the uplink data (Uplink Data) to a serving base station (refer to S401).

The serving base station forwards the uplink data (Uplink Data) to a core network (refer to S402), and in response to the RRC resume request message, sends an RRC resume (RRC Resume) message to the user equipment (refer to S403), to indicate the user equipment to switch to an RRC connected state.

In response to the RRC resume message, the user equipment switches to the RRC connected state, and sends an RRC resume complete (RRC Resume Complete) message to the serving base station (refer to S404), to notify the serving base station that the user equipment has switched to the RRC connected state.

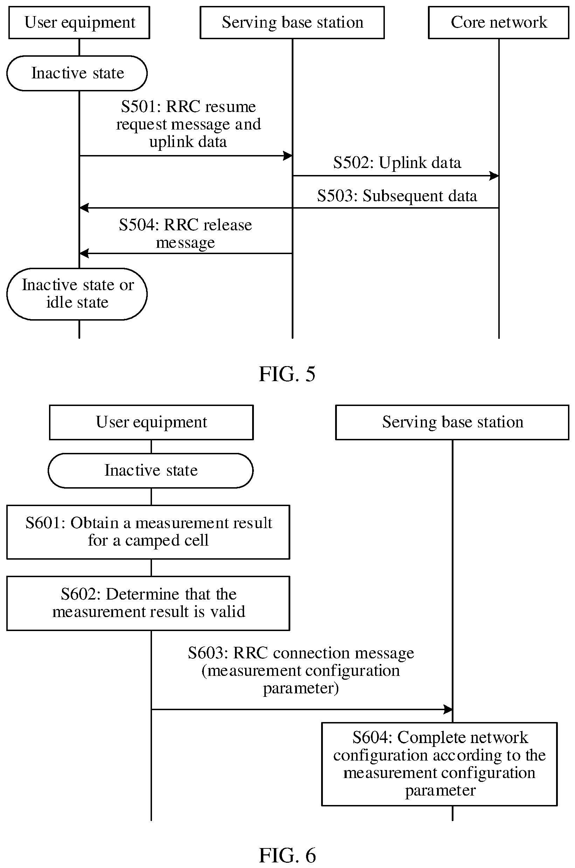

For another example, FIG. 5 is a diagram of an information exchange scenario in which user equipment transmits uplink data in another example. It may be understood that the information exchange scenario in which the user equipment transmits the uplink data shown in FIG. 5 is similar to the information exchange scenario in which the user equipment transmits the uplink data shown in FIG. 4. A difference lies in that, after step S402 shown in FIG. 4, if the serving base station determines not to switch the user equipment to the RRC connected state, in the information exchange scenario in which the user equipment transmits the uplink data shown in FIG. 5, the serving base station triggers an RRC release (RRC Release) message, to indicate the user equipment to enter an RRC inactive state or an RRC idle state.

Specifically, as shown in FIG. 5, first, the user equipment in the RRC inactive state sends an RRC resume request (RRC Resume Request) message and the uplink data (Uplink Data) to a serving base station (refer to S501).

The serving base station forwards the uplink data (Uplink Data) to a core network (refer to S502).

The core network transmits subsequent data (Subsequent Data) to the user equipment (refer to S503).

In response to the RRC resume request message, the serving base station sends an RRC release (RRC Release) message to the user equipment (refer to S504), to indicate the user equipment to enter the RRC inactive state or the RRC idle state.

It may be understood that, as shown in FIG. 3 to FIG. 5, before the user equipment transmits the uplink data to the network device, the network device needs to perform network configuration. However, in a network configuration process, because the network device lacks a measurement configuration parameter of the user equipment during the RRC inactive or the idle state, and does not have a measurement result for a cell around which the user equipment camps, resulting in a lack of a reference basis for setting a cell reselection parameter.

In addition, the network configuration needs to refer to a measurement result reported by the user equipment. However, currently, the user equipment needs to switch from the RRC inactive state to the RRC connected state to report a measurement result during the RRC inactive state or the RRC idle state. Consequently, the network device cannot rapidly perform network configuration, and a transient throughput of the user equipment cannot reach a peak value. This affects an initial transmission rate of a data transmission service (for example, extended reality (Extended Reality, XR) and video playing), and degrades user experience.

Based on this, this application provides a network configuration method, user equipment, a network device, and a computer storage medium. When transmitting uplink data/signaling, the user equipment transmits, in an RRC inactive state, a measurement configuration parameter during an RRC inactive state or an RRC idle state, to reduce signaling overheads caused by state migration of the user equipment, support the network device in rapidly performing network configuration, and reduce a service delay.

It should be noted that the user equipment (UE) switches from the RRC connected state to the RRC inactive state under a service of an anchor base station (Anchor gNB), and the anchor base station saves a user equipment context (UE Context). The user equipment context is the same as a user equipment context in the RRC connected state or a part of the user equipment context in the RRC connected state.

It may be understood that the user equipment moves in a radio access network-based notification area (RNA) in the following two scenarios:
Scenario 1: The serving base station and the anchor base station are a same base station.
   In Scenario 1, the user equipment is still within a service range of the anchor base station (Anchor gNB), and the anchor base station does not need to migrate a user equipment context. When the user equipment needs to send uplink data or signaling to a core network, the user equipment may directly forward the uplink data or signaling to the core network through the serving base station (that is, the anchor base station).
Scenario 2: The serving base station and the anchor base station are different base stations.

In Scenario 2, the user equipment is in a service range of a serving base station (Serving gNB), and the anchor base station needs to migrate a user equipment context or a partial user equipment context to the serving base station. When the user equipment needs to send uplink data or signaling to the core network, the user equipment first forwards the uplink data or signaling to the anchor base station through the serving base station, and then the anchor base station forwards the uplink data or signaling to the core network.

The following clearly and completely describes technical solutions in embodiments of this application with reference to the accompanying drawings in embodiments of this application.

Specifically, FIG. 6 is a diagram of an information exchange scenario of a network configuration method in Scenario 1. It may be understood that in Scenario 1, user equipment transmits uplink data or signaling to a core network through a serving base station.

As shown in FIG. 6, the network configuration method may include the following steps.

S601: The user equipment obtains a measurement result for a camped cell.

The user equipment is in an RRC inactive state. The camped cell is a cell in which the user equipment is currently located. The measurement result is a measurement result of the user equipment during an RRC inactive state or an RRC idle state.

The measurement result may include at least one of the following: synchronization signal block reference signal received power (SSB-RSRP), synchronization signal block reference signal received quality (SSB-RSRP), physical layer reference signal received power (L1-RSRP), and physical layer reference signal received quality (L1-RSRQ).

The user equipment may report the SSB-RSRP, the SSB-RSRQ, the L1-RSRP, and the L1-RSRQ based on an SSB index (Index).

S602: The user equipment determines that the measurement result is valid.

In some embodiments, when the measurement result meets the following condition, the user equipment determines that the measurement result is valid:
Condition 1: A measured value is in a valid value range.

The measured value may include at least one of the following: measured values of the SSB-RSRP, the SSB-RSRQ, the L1-RSRP, and the L1-RSRQ.

It may be understood that the valid value range is related to a network feature. In some embodiments, the valid value range is -140 decibel-milliwatt (dBm) to -40 dBm.

Condition 2: A measurement object belongs to a measurement object specified and configured in a network.

The measurement object may include at least one of the following: a measurement frequency, a measurement bandwidth, whether a specified cell is an optional configuration, and a quantity of antennas for cell measurement.

The measurement object specified and configured in the network is related to the network feature. When the measurement object belongs to the measurement object specified and configured in the network, it is used to indicate that the measurement object meets the network configuration requirement, and the measurement result is valid.

S603: The user equipment sends an RRC connection message to the serving base station.

The RRC connection message is used to request to set up an RRC connection between the user equipment and the serving base station.

It may be understood that the RRC connection message carries a measurement configuration parameter, and the measurement configuration parameter is used to indicate the serving base station to complete network configuration. The measurement configuration parameter may include a measurement result or a valid identifier of the measurement result during the RRC inactive state or the RRC idle state of the user equipment.

The valid identifier of the measurement result is used to notify the serving base station that the measurement result is valid. The valid identifier of the measurement result may be a message or a new field added to a message. When the valid identifier of the measurement result is a message, the serving base station receives the message to determine that the measurement result reported by the user equipment is valid. When the valid identifier of the measurement result is a new field added to a message, the serving base station may view the field after receiving the message. For example, when the field is set to 1, the serving base station may determine that the measurement result reported by the user equipment is valid.

In some embodiments, the user equipment may report the valid identifier of the measurement result by using any one of the following RRC connection messages: an RRC resume request (RRC Resume Request) message, an RRC setup request (RRC Setup Request) message, and an RRC reestablishment request (RRC Reestablishment Request) message.

In some embodiments, the user equipment may report the measurement result by using any one of the following RRC connection messages: an RRC resume request (RRC Resume Request) message, an RRC setup request (RRC Setup Request) message, an RRC reestablishment request (RRC Reestablishment Request) message, an RRC resume complete (RRC Resume Complete) message, an RRC setup complete (RRC Setup Complete) message, and an RRC reestablishment complete (RRC Reestablishment Complete) message.

For example, when the user equipment needs to send uplink data, the user equipment may send the uplink data and the RRC resume request (RRC Resume Request) message to the serving base station. The RRC resume request message carries the measurement result or the valid identifier of the measurement result.

For another example, when the user equipment needs to set up an RRC connection, the user equipment may send the RRC setup request (RRC Setup Request) message to the serving base station. The RRC setup request message carries the measurement result or the valid identifier of the measurement result.

For another example, when the user equipment needs to reestablish an RRC connection, the user equipment may send the RRC reestablishment request (RRC Reestablishment Request) message to the serving base station. The RRC reestablishment request message carries the measurement result or the valid identifier of the measurement result.

In this embodiment, if the user equipment determines that the measurement result is valid, the user equipment sends the RRC connection message to the serving base station. The RRC connection message carries the measurement configuration parameter.

It may be understood that in another embodiment, if the user equipment determines that the measurement result is invalid, the user equipment may obtain a new measurement result, and determine whether the new measurement result is valid until a valid measurement result is obtained.

S604: The serving base station completes network configuration according to the measurement configuration parameter.

The network configuration may include activating, adding, or deleting carrier aggregation (Carrier Aggregation, CA), dual connectivity (Dual Connectivity, DC), a cell group (Cell Group, CG), a secondary cell group (Secondary Cell Group, SCG), a cell (Cell), a secondary cell (Secondary Cell, Scell), and the like.

In some embodiments, when the measurement configuration parameter carried in the RRC connection message is the measurement result, the serving base station directly completes network configuration according to the measurement result.

In other embodiments, when the measurement configuration parameter carried in the RRC connection message is the valid identifier of the measurement result, the serving base station first sends a measurement report request to the user equipment, to request the user equipment to report the measurement result during the RRC inactive state or the RRC idle state. Then, after receiving the measurement result from the user equipment, the serving base station completes network configuration according to the measurement result.

In this embodiment, the user equipment in the RRC inactive state may first determine whether the measurement result of the user equipment during the RRC inactive state or the RRC idle state is valid. If the user equipment determines that the measurement result is valid, the user equipment sends the RRC connection message to the serving base station. The RRC connection message carries the measurement configuration parameter. Then, the serving base station may complete network configuration according to the measurement configuration parameter. The user equipment can report a valid measurement result during the RRC inactive state, and report the measurement result without needing to switch to an RRC connected state, so that a requirement that the serving base station rapidly performs network configuration can be met.

For example, the user equipment in the RRC inactive state may first determine whether the measurement result of the user equipment during the RRC inactive state or the RRC idle state is valid. If the user equipment determines that the measurement result is valid, the user equipment sends an RRC resume request (RRC Resume Request) message to the serving base station. The RRC resume request message carries the valid identifier of the measurement result. Then, the serving base station sends an RRC resume (RRC Resume) message to the user equipment, and the RRC resume message may carry the measurement report request. Then, the user equipment sends an RRC resume complete (RRC Resume Complete) message to the serving base station. The RRC resume complete message may carry the measurement result of the user equipment during the RRC inactive state or the idle state.

If the RRC resume (RRC Resume) message does not carry the measurement report request, the RRC resume complete (RRC Resume Complete) message may carry the valid identifier of the measurement result. After obtaining the valid identifier of the measurement result, the serving base station may send the measurement report request to the user equipment, to request the user equipment to report the measurement result during the RRC inactive state or the idle state.

For another example, if the serving base station determines not to switch the user equipment to the RRC connected state, the serving base station triggers an RRC release (RRC Release) message, to indicate the user equipment to enter the RRC inactive state or the RRC idle state. The RRC release message may carry a measurement configuration parameter during the RRC inactive state or the idle state of the user equipment. When the user equipment obtains the measurement configuration parameter from the RRC release message, the user equipment may perform a measurement operation in the RRC inactive state or the idle state based on the measurement configuration parameter, and obtain a corresponding measurement result. After obtaining the measurement result of the user equipment during the RRC inactive or the idle state, the serving base station may rapidly implement network configuration according to a base station implementation algorithm, for example, add, delete, or activate CA/DC.

It may be understood that in this embodiment of this application, a data or signaling transmission mode may include an SDT mode or a non-SDT mode. This is not limited in this application.

It should be noted that in this embodiment of this application, when an SDT session is set up, the user equipment transmits uplink data or signaling in the SDT mode. When transmitting uplink data or signaling in the SDT mode, the user equipment does not need to frequently switch an RRC state, to reduce signaling overheads caused by state switching of the user equipment, reduce a service delay, and improve network configuration efficiency.

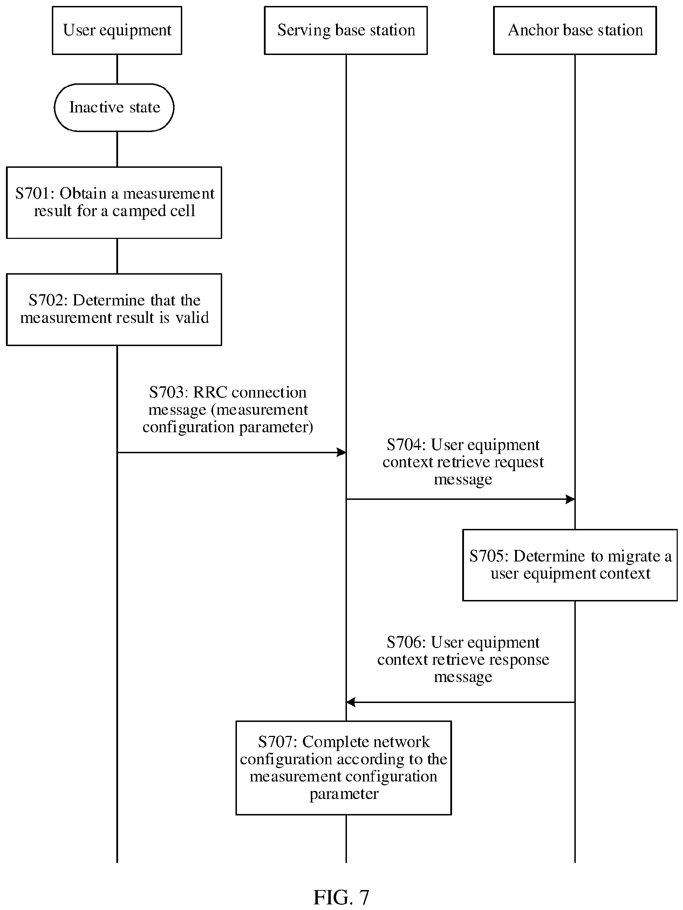

FIG. 7 is a diagram of an information exchange scenario of a network configuration method in Scenario 2. It may be understood that in Scenario 2, user equipment transmits uplink data or signaling to a core network sequentially through a serving base station and an anchor base station.

As shown in FIG. 7, the network configuration method may include the following steps.

S701: The user equipment obtains a measurement result for a camped cell.

The user equipment is in an RRC inactive state.

S702: The user equipment determines that the measurement result is valid.

S703: The user equipment sends an RRC connection message to the serving base station.

The RRC connection message is used to request to set up an RRC connection between the user equipment and the serving base station. The RRC connection message carries a measurement configuration parameter.

It may be understood that a specific implementation of steps S701 to S703 is the same as that of steps S601 to S603 shown in FIG. 6, and details are not described herein again.

S704: The serving base station sends a user equipment context retrieve request (UE Context Retrieve Request) message to the anchor base station.

The user equipment context retrieve request message is used to request to obtain a user equipment context (UE Context) from the anchor base station, to manage an RRC state of the UE.

S705: The anchor base station determines to migrate a user equipment context (UE Context).

In some embodiments, when at least one of the following conditions is met, the anchor base station determines to migrate the user equipment context.

Condition 1: A first implementation algorithm of the anchor base station is executed, and the user equipment context is migrated according to the first implementation algorithm.

The first implementation algorithm is used to indicate to migrate the user equipment context.

Condition 2: A first attribute requirement of a service delay is met, and the user equipment context is migrated according to the first attribute requirement of the service delay.

The first attribute requirement is used to indicate to migrate the user equipment context. A service delay attribute is a maximum delay allowed for scheduling uplink data. When the maximum delay is greater than or equal to a delay threshold, the user equipment context needs to be migrated. The delay threshold is a minimum delay that triggers migration of the user equipment context.

In other embodiments, when at least one of the following conditions is met, the anchor base station determines not to migrate the user equipment context.

Condition 1: A second implementation algorithm of the anchor base station is executed, and a user equipment context is not migrated according to the second implementation algorithm.

The second implementation algorithm is used to indicate not to migrate the user equipment context.

Condition 2: A second attribute requirement of a service delay is met, and the user equipment context is not migrated according to the second attribute requirement of the service delay.

The second attribute requirement is used to indicate not to migrate the user equipment context. It may be understood that when a maximum delay allowed for uplink data scheduling is less than a delay threshold, the user equipment context does not need to be migrated.

Condition 3: Data transmission statistics information of an SDT service is obtained, and the data transmission statistics information is used to indicate not to migrate the user equipment context.

For example, the data transmission statistics information includes a traffic attribute (Traffic Arrtribute). Based on the traffic attribute, uplink data needs to be quickly sent, and the user equipment context is not migrated.

It may be understood that, compared with a default solution of migrating the user equipment context, in this embodiment, whether to migrate the user equipment context may be determined according to an actual requirement, and a signaling resource can be saved, to avoid a waste of signaling resources caused by migrating the user equipment context in an unnecessary case.

S706: The anchor base station sends a user equipment context retrieve response (UE Context Retrieve Request) message to the serving base station.

The user equipment context retrieve response message carries the user equipment context (UE Context).

S707: The serving base station completes network configuration according to the measurement configuration parameter.

It may be understood that a specific implementation of step S707 is the same as that of step S604 shown in FIG. 6, and details are not described herein again.

In this embodiment, the user equipment in the RRC inactive state may first determine whether the measurement result of the user equipment during the RRC inactive state or an RRC idle state is valid. If the user equipment determines that the measurement result is valid, the user equipment sends the RRC connection message to the serving base station. The RRC connection message carries the measurement configuration parameter. Then, the serving base station sends the user equipment context retrieve request message to the anchor base station, to request to obtain the user equipment context from the anchor base station. After receiving the user equipment context retrieve request message, the anchor base station determines whether to migrate the user equipment context. If the anchor base station determines to migrate the user equipment context, the anchor base station sends the user equipment context retrieve response message to the serving base station. The user equipment context retrieve response message carries the user equipment context. Then, the serving base station may complete network configuration according to the measurement configuration parameter. The user equipment can report a valid measurement result during the RRC inactive state, and report the measurement result without needing to switch to an RRC connected state. After receiving the user equipment context, the serving base station completes network configuration, so that a requirement that the serving base station rapidly performs network configuration can be met.

The network configuration method provided in embodiments of this application is described below with reference to more specific embodiments (for example, Embodiments 1 to 8). In the following embodiments, Embodiment 1 to Embodiment 4 are examples of the network configuration method in Scenario 1, and Embodiment 5 to Embodiment 8 are examples of the network configuration method in Scenario 2.

### Embodiment 1

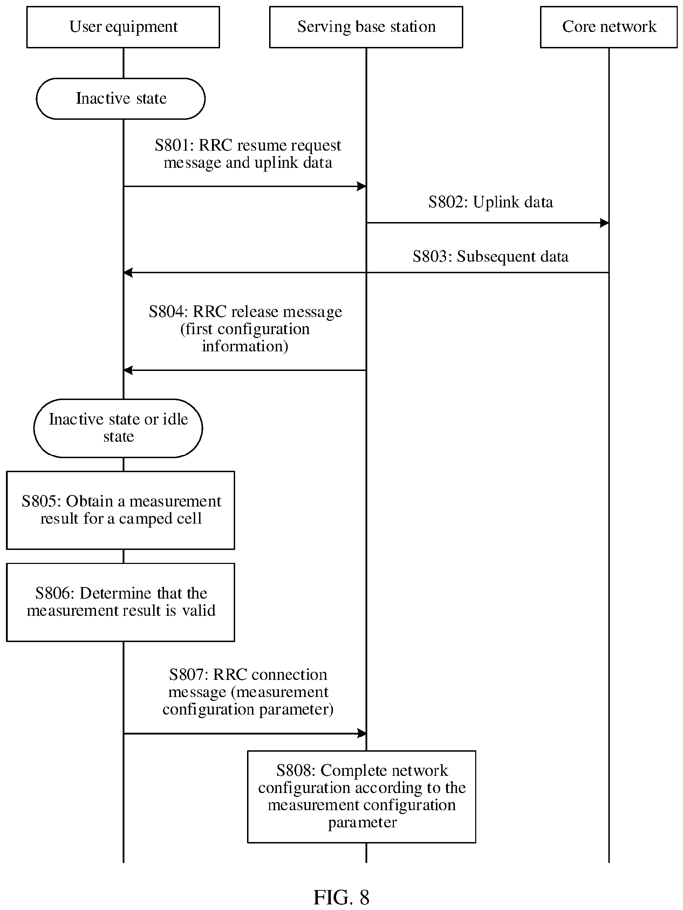

FIG. 8 is a diagram of information exchange of the network configuration method in Scenario 1. It may be understood that in Scenario 1, user equipment transmits uplink data or signaling to a core network through a serving base station.

Refer to FIG. 8. The network configuration method may include the following steps.

S801: The user equipment sends an RRC resume request (RRC Resume Request) message and uplink data (Uplink Data) to the serving base station.

The user equipment is in an RRC inactive state.

In this embodiment, the RRC resume request message is used to request to set up an SDT session, and the SDT session is used to transmit uplink data of the SDT service.

S802: The serving base station forwards the uplink data (Uplink Data) to a core network.

S803: The core network sends subsequent data (Subsequent Data) to the user equipment.

It may be understood that the subsequent data from the core network may be directly forwarded by the serving base station to the user equipment.

S804: The serving base station sends an RRC release (RRC Release) message to the user equipment in response to the RRC resume request message.

The RRC release message is used to indicate to terminate the SDT session. The RRC release message carries first configuration information, the first configuration information is used to configure a measurement report, and the measurement report is used to indicate the user equipment to obtain a measurement result for a camped cell. The first configuration information may include any one of the following information: a measurement report parameter, first indication information, and second indication information that are of the user equipment during the RRC inactive state or the idle state.

The measurement report parameter may include a measurement result for each cell in a cell list (Cell List).

It may be understood that when the cell list does not include a cell in which the user equipment is currently located (that is, when triggering the RRC resume request message), the user equipment measures the cell in which the user equipment is currently located, and records a measurement result for the cell in which the user equipment is currently located. SSB-RSRP, SSB-RSRQ, L1-RSRP, and L1-RSRQ are all measurement results for the cell in which the user equipment is currently (that is, when triggering the RRC resume request message). The SSB-RSRP/SSB-RSRQ may be a largest value in a plurality of measured values for the cell in which the user equipment is currently located.

The first indication information is used to indicate the user equipment to carry a valid identifier of the measurement result when triggering the RRC connection message.

The second indication information is used to indicate the user equipment to directly report the measurement result for the camped cell. When the user equipment obtains the second indication information, if the measurement result is valid, the user equipment may directly report the measurement result, and does not need to wait for the network device to trigger a measurement report request.

It may be understood that, in some embodiments, the user equipment may report the measurement result in a segmented transmission mode. For example, when an uplink resource obtained by the user equipment is less than a preset resource threshold, the user equipment may perform segment transmission on the measurement result, and add segment indication information to content transmitted in each segment. The resource threshold is a lower limit value of a resource size required for reporting the measurement result by the user equipment. The segment indication information is used to indicate a segment to which currently transmitted content belongs.

In other embodiments, in step S804, when the RRC release (RRC Release) message sent by the serving base station does not carry the first indication information, the user equipment may determine, based on a broadcast message of a cell in which the user equipment is located when triggering the RRC connection message (for example, the RRC resume request message in step S801), whether to report the valid identifier of the measurement result. For example, the broadcast message may include the first indication information. When receiving the broadcast message, the user equipment reports the valid identifier of the measurement result when triggering the RRC connection message.

In other embodiments, in step S804, when the RRC release (RRC Release) message sent by the serving base station does not carry the second indication information, the user equipment may determine, based on the broadcast message of the cell in which the user equipment is located when triggering the RRC connection message (for example, the RRC resume request message in step S801), whether to report the measurement result. For example, the broadcast message may include the second indication information. When receiving the broadcast message, the user equipment reports the measurement result when triggering the RRC connection message.

In other embodiments, in step S804, the serving base station sends the RRC release (RRC Release) message to the user equipment, and the RRC release message may further carry a measurement report threshold. The measurement report threshold is a threshold of a data amount of the measurement result. The measurement report threshold is used to indicate whether the user equipment reports the measurement result. For example, after the user equipment receives the RRC release message, if a data amount of the measurement result is less than the measurement report threshold, the user equipment sends the measurement result to the serving base station. If the data amount of the measurement result is greater than or equal to the measurement report threshold, the user equipment sends the valid identifier of the measurement result to the serving base station.

In other embodiments, the broadcast message of the cell in which the user equipment is located when triggering an RRC connection message (for example, the RRC resume request message in step S801) may carry the measurement report threshold. The measurement report threshold is used to indicate whether the user equipment reports the measurement result. For example, after the user equipment receives the broadcast message, if the data amount of the measurement result is less than the measurement report threshold, the user equipment reports the measurement result. If the data amount of the measurement result is greater than or equal to the measurement report threshold, the user equipment reports the valid identifier of the measurement result.

S805: The user equipment obtains the measurement result for the camped cell in response to the RRC release message.

In this embodiment, the user equipment may measure the camped cell based on the first configuration information carried in the RRC release message, to obtain the measurement result for the camped cell.

S806: The user equipment determines that the measurement result is valid.

S807: The user equipment sends an RRC connection message to the serving base station.

The RRC connection message carries a measurement configuration parameter.

S808: The serving base station completes network configuration according to the measurement configuration parameter.

It may be understood that a specific implementation of steps S805 to S808 is approximately the same as that of steps S601 to S604 shown in FIG. 6, and details are not described herein again.

It may be understood that in this embodiment, before the user equipment obtains the measurement result for the camped cell, the serving base station sends the RRC release message to the user equipment. The RRC release message carries the first configuration information, to indicate the user equipment to measure the camped cell based on the first configuration information. After obtaining the measurement result for the camped cell through measurement, the user equipment determines whether the measurement result is valid. If the user equipment determines that the measurement result is valid, the user equipment sends the RRC connection message to the serving base station. The RRC connection message carries the measurement configuration parameter. Then, the serving base station may complete network configuration according to the measurement configuration parameter. The user equipment can report a valid measurement result during the RRC inactive state, and report the measurement result without needing to switch to an RRC connected state, so that a requirement that the serving base station rapidly performs network configuration can be met.rms network configuration can be met.

### Embodiment 2

A difference between Embodiment 2 and Embodiment 1 lies in that in step S801 of Embodiment 1, when the user equipment triggers the RRC resume request (RRC Resume Request) message, the RRC resume request carries the valid identifier of the measurement result.

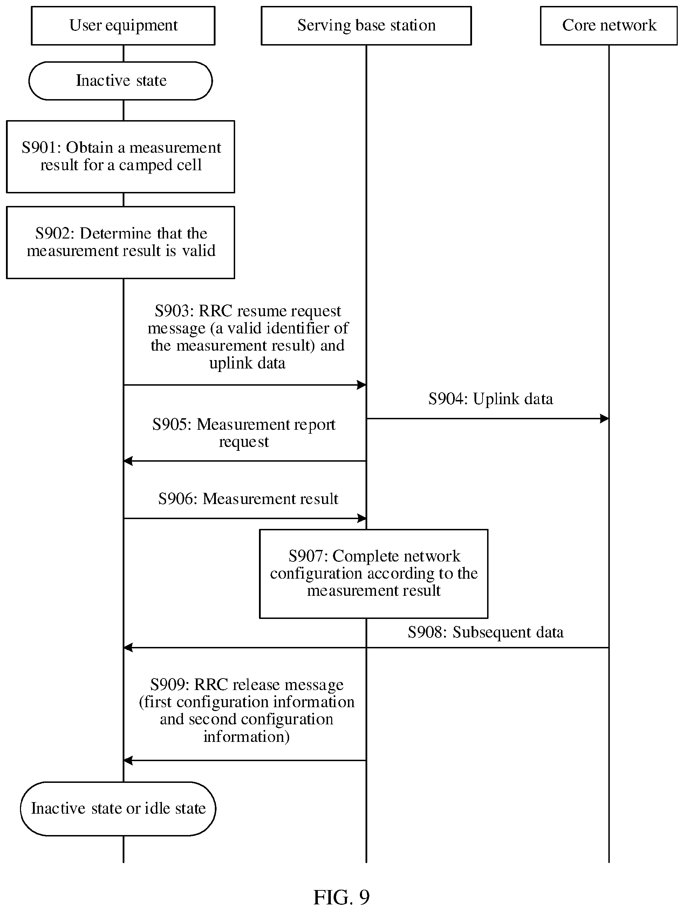

FIG. 9 is a diagram of information exchange of the network configuration method in Scenario 1. Refer to FIG. 9. The network configuration method may include the following steps.

S901: User equipment obtains a measurement result for a camped cell.

The user equipment is in an RRC inactive state.

S902: The user equipment determines that the measurement result is valid.

It may be understood that a specific implementation of steps S901 and S902 is the same as that of steps S601 and S602 shown in FIG. 6, and details are not described herein again.

S903: The user equipment sends an RRC resume request (RRC Resume Request) message and uplink data (Uplink Data) to a serving base station.

The RRC resume request message is used to request to set up an SDT session. The RRC resume request message carries a valid identifier of the measurement result.

In some embodiments, the RRC resume request message may include the valid identifier of the measurement result. In other embodiments, the user equipment may alternatively send the valid identifier of the measurement result through a separate message.

S904: The serving base station forwards the uplink data (Uplink Data) to a core network.

S905: The serving base station sends a measurement report request to the user equipment.

The measurement report request is used to request the user equipment to report the measurement result.

S906: The user equipment sends the measurement result to the serving base station in response to the measurement report request.

S907: The serving base station completes network configuration according to the measurement result.

It may be understood that a specific implementation of step S907 is the same as that of step S604 shown in FIG. 6, and details are not described herein again.

S908: The core network sends subsequent data (Subsequent Data) to the user equipment.

It may be understood that the subsequent data from the core network may be directly forwarded by the serving base station to the user equipment.

S909: The serving base station sends an RRC release (RRC Release) message to the user equipment.

The RRC release message is used to indicate to terminate the SDT session. The RRC release message carries first configuration information and second configuration information. The first configuration information is used to configure a measurement report. The second configuration information is used to configure a cell redirection and/or reselection parameter.

In some embodiments, the serving base station may obtain the second configuration information according to a base station implementation algorithm. In other embodiments, the serving base station may alternatively obtain the second configuration information based on the measurement result reported by the user equipment.

It may be understood that in this embodiment, when determining that the measurement result is valid, the user equipment sends the RRC resume request message to the serving base station. The RRC resume request message carries the valid identifier of the measurement result. The serving base station sends the measurement report request to the user equipment, to request the user equipment to report the measurement result. After receiving the measurement report request, the user equipment sends the measurement result to the serving base station. The serving base station completes network configuration according to the measurement result, and sends the RRC release message to the user equipment. The RRC release message carries the first configuration information and the second configuration information, to indicate the user equipment to measure the camped cell again based on the first configuration information and the second configuration information. The serving base station does not indicate the user equipment to perform state migration, and the user equipment can report the measurement result without needing to switch to the RRC connected state, so that a requirement that the serving base station rapidly performs network configuration can be met.

### Embodiment 3

A difference between Embodiment 3 and Embodiment 1 lies in that in step S801 of Embodiment 1, when the user equipment triggers the RRC resume request (RRC Resume Request) message, the RRC resume request message carries the measurement result, and the serving base station triggers the RRC resume (RRC Resume) message, to indicate the user equipment to switch to the RRC connected state.

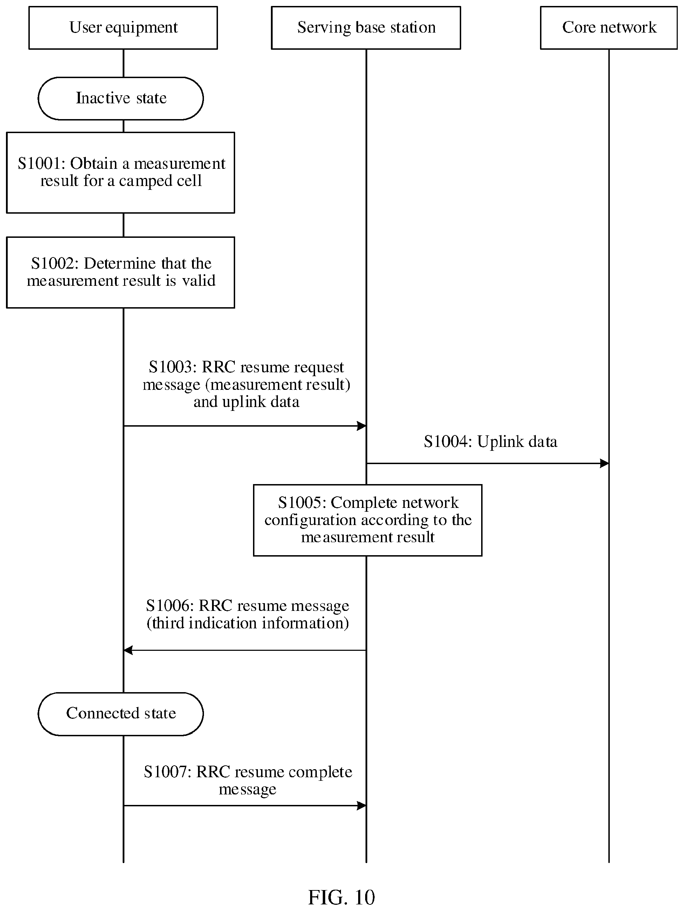

FIG. 10 is a diagram of information exchange of the network configuration method in Scenario 1. Refer to FIG. 10. The network configuration method may include the following steps.

S1001: User equipment obtains a measurement result for a camped cell.

The user equipment is in an RRC inactive state.

S1002: The user equipment determines that the measurement result is valid.

It may be understood that a specific implementation of steps S1001 and S1002 is the same as that of steps S601 and S602 shown in FIG. 6, and details are not described herein again.

S1003: The user equipment sends an RRC resume request (RRC Resume Request) message and uplink data (Uplink Data) to a serving base station.

The RRC resume request message carries the measurement result.

In some embodiments, the RRC resume request message may include the measurement result. In other embodiments, the user equipment may alternatively send the measurement result through a separate message.

S1004: The serving base station forwards the uplink data (Uplink Data) to a core network.

S1005: The serving base station completes network configuration according to the measurement result.

It may be understood that a specific implementation of step S1005 is the same as that of S604 shown in FIG. 6, and details are not described herein again.

S1006: The serving base station sends an RRC resume (RRC Resume) message to the user equipment.

The RRC resume message is used to indicate the user equipment to switch to an RRC connected state. The RRC resume message carries third indication information, and the third indication information is used to indicate a reason for the user equipment to switch to the RRC connected state, for example, performing a cell operation. The cell operation may include activating a secondary cell (Scell Activation), deleting a secondary cell (Scell Deleted), adding a secondary cell (Scells Added), or the like.

In some embodiments, the serving base station may perform the cell operation according to a base station implementation algorithm. In other embodiments, the serving base station may alternatively perform the cell operation based on uplink assistance information (Uplink Assistance Information, UAI). The uplink assistance information (UAI) may include a size of a service data amount or a data transmission mode (for example, SDT or MO-SDT). Alternatively, the serving base station may perform the cell operation based on the measurement result reported by the user equipment.

S1007: The user equipment sends an RRC resume complete (RRC Resume Complete) message to the serving base station in response to the RRC resume message.

The RRC resume complete message is used to notify the serving base station that the user equipment has switched to the RRC connected state. In other embodiments, the RRC resume complete message may not be sent.

It may be understood that in this embodiment, when determining that the measurement result is valid, the user equipment sends the RRC resume request message to the serving base station. The RRC resume request message carries the measurement result. The serving base station completes network configuration according to the measurement result, and sends the RRC resume message to the user equipment, to indicate the user equipment to switch to the RRC connected state. The RRC resume message carries the third indication information. After receiving the RRC resume message, the user equipment may perform a cell operation based on the third indication information, to synchronize a network configuration on a serving base station side, switch from the RRC inactive state to the RRC connected state, and then send the RRC resume complete message to the serving base station. The user equipment can report a valid measurement result during the RRC inactive state, and report the measurement result without needing to switch to an RRC connected state, so that a requirement that the serving base station rapidly performs network configuration can be met.

### Embodiment 4

A difference between Embodiment 4 and Embodiment 1 lies in that the user equipment triggers an RRC setup request (RRC Setup Request) message, and the RRC setup request message carries a valid identifier of a measurement result.

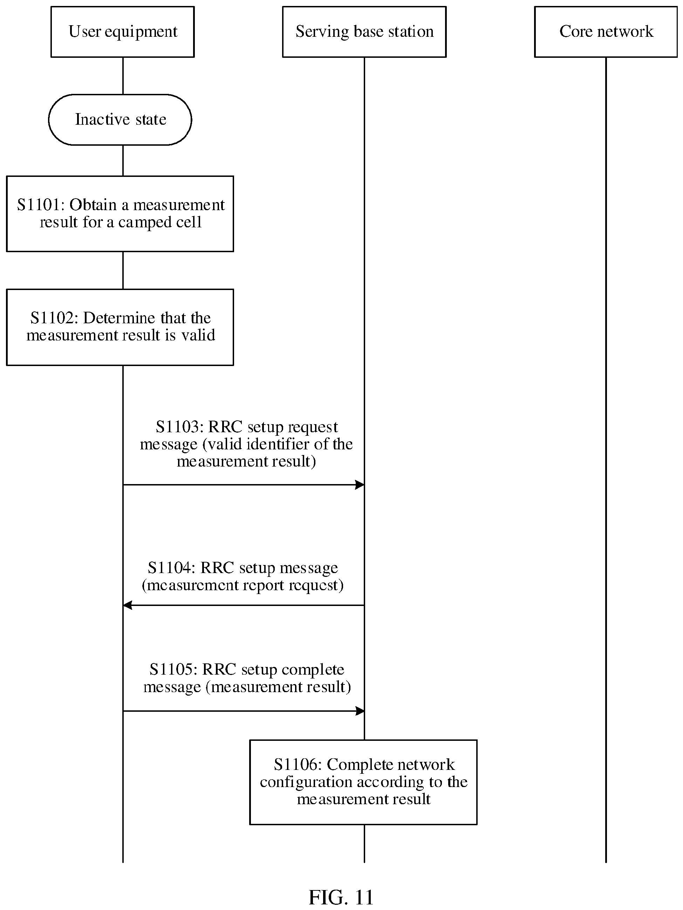

FIG. 11 is a diagram of information exchange of the network configuration method in Scenario 1. Refer to FIG. 11. The network configuration method may include the following steps.

S1101: User equipment obtains a measurement result for a camped cell.

The user equipment is in an RRC inactive state.

S1102: The user equipment determines that the measurement result is valid.

It may be understood that a specific implementation of steps S1101 and S1102 is the same as that of steps S601 and S602 shown in FIG. 6, and details are not described herein again.

S1103: The user equipment sends an RRC setup request (RRC Setup Request) message to a serving base station.

The RRC setup request message is used to request to set up an RRC connection. The RRC setup request message carries a valid identifier of the measurement result.

S1104: The serving base station sends an RRC setup (RRC Setup) message to the user equipment in response to the RRC setup request message.

The RRC setup message is used to notify the user equipment that an RRC connection is allowed to be set up. The RRC setup message carries a measurement report request. The measurement report request is used to request the user equipment to report the measurement result.

S1105: The user equipment sends an RRC setup complete (RRC Setup Complete) message to the serving base station in response to the RRC setup message.

The RRC setup complete message is used to notify the serving base station that an RRC connection is set up. The RRC setup complete message carries the measurement result.

S1106: The serving base station completes network configuration according to the measurement result.

It may be understood that a specific implementation of step S1106 is the same as that of step S604 shown in FIG. 6, and details are not described herein again.

In this embodiment, when determining that the measurement result is valid, the user equipment sends the RRC setup request message to the serving base station. The RRC setup request message carries the valid identifier of the measurement result. The serving base station sends the RRC setup message to the user equipment in response to the RRC setup request message, to notify the user equipment that the RRC connection is allowed to be set up. The RRC setup message carries the measurement report request. After receiving the RRC setup message, the user equipment sets up the RRC connection, and then sends the RRC setup complete message to the serving base station, to notify the serving base station that the RRC connection is set up. The RRC setup complete message carries the measurement result. The serving base station then completes network configuration according to the measurement result. The user equipment can report the measurement result without needing to switch to the RRC connected state, so that a requirement that the serving base station rapidly performs network configuration can be met.

### Embodiment 5

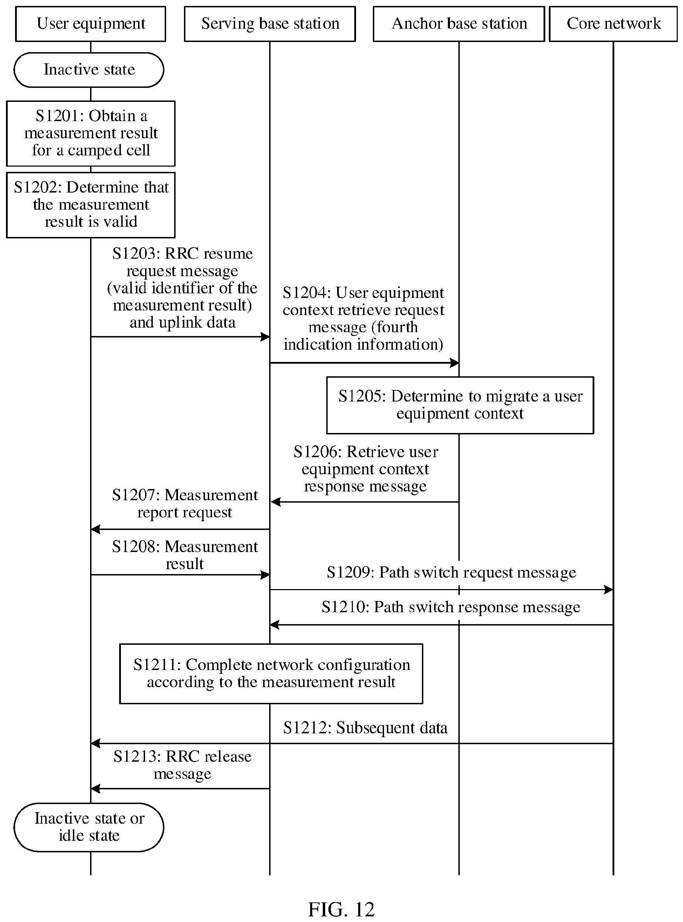

FIG. 12 is a diagram of information exchange of the network configuration method in Scenario 2. It may be understood that in Scenario 2, user equipment transmits uplink data or signaling to a core network sequentially through a serving base station and an anchor base station.

Refer to FIG. 12. The network configuration method may include the following steps.

S1201: The user equipment obtains a measurement result for a camped cell.

The user equipment is in an RRC inactive state.

S1202: The user equipment determines that the measurement result is valid.

It may be understood that a specific implementation of steps S1201 and S1202 is the same as that of steps S601 and S602 shown in FIG. 6, and details are not described herein again.

S1203: The user equipment sends an RRC resume request (RRC Resume Request) message and uplink data (Uplink Data) to the serving base station.

The RRC resume request message is used to request to set up an SDT session. The RRC resume request message carries a valid identifier of the measurement result.

In some embodiments, the RRC resume request message may include the valid identifier of the measurement result. In other embodiments, the user equipment may alternatively send the valid identifier of the measurement result through a separate message.

S1204: The serving base station sends a user equipment context retrieve request (UE Context Retrieve Request) message to the anchor base station.

The user equipment context retrieve request message is used to request a user equipment context (UE Context) from the anchor base station. The user equipment context retrieve request message carries fourth indication information, and the fourth indication message is used to indicate that a measurement result of the user equipment in the RRC inactive state or an idle state is valid. The fourth indication message may include the valid identifier of the measurement result, and a data amount and a quantity of pieces of measurement records.

S1205: The anchor base station determines whether to migrate a user equipment context (UE Context).

It should be noted that an embodiment shown in FIG. 12 is described by using an example in which the user equipment context is to be migrated.

It may be understood that a specific implementation of step S1205 is the same as that of step S705 shown in FIG. 7, and details are not described herein again.

S1206: The anchor base station sends a user equipment context retrieve response (UE Context Retrieve Response) message to the serving base station.

The user equipment context retrieve response message carries the user equipment context (UE Context). In other embodiments, the user equipment context retrieve response message may further carry a measurement report request.

S1207: The serving base station sends the measurement report request to the user equipment.

The measurement report request is used to request the user equipment to report the measurement result.

S 1208: The user equipment sends the measurement result to the serving base station in response to the measurement report request.

S1209: The serving base station sends a path switch request (Path Switch Request) message to the core network.

The path switch request message is used to request to switch a downlink endpoint to the serving base station.

S1210: The core network sends a path switch response (Path Switch Response) message to the serving base station in response to the path switch request.

The path switch response message is used to notify the serving base station that a downlink is switched.

S1211: The serving base station completes network configuration according to the measurement result.

It may be understood that a specific implementation of step S1211 is the same as that of step S604 shown in FIG. 6, and details are not described herein again.

S1212: The core network sends subsequent data (Subsequent Data) to the user equipment.

It may be understood that the subsequent data from the core network may be forwarded sequentially by the anchor base station and the serving base station to the user equipment.

S1213: The serving base station sends an RRC release (RRC Release) message to the user equipment.

The RRC release message is used to indicate the user equipment to enter the RRC inactive state or the idle state, to terminate the SDT session. The RRC release message carries first configuration information and second configuration information. The first configuration information is used to configure a measurement report. The second configuration information is used to configure a cell redirection and/or reselection parameter.

It may be understood that in this embodiment, when determining that the measurement result is valid, the user equipment sends the RRC resume request message to the serving base station. The RRC resume request message carries the valid identifier of the measurement result. After receiving the RRC resume request message, the serving base station sends the user equipment context retrieve request message to the anchor base station, to request the anchor base station to migrate the user equipment context. When determining to migrate the user equipment context, the anchor base station sends the user equipment context retrieve response message to the serving base station. The user equipment context retrieve response message carries the user equipment context. After receiving the user equipment context retrieve response message, the serving base station sends the measurement report request to the user equipment, to request the user equipment to report the measurement result. After receiving the measurement report request, the user equipment sends the measurement result to the serving base station. The serving base station completes network configuration according to the measurement result, and sends the RRC release message to the user equipment. The RRC release message carries the first configuration information and the second configuration information, to indicate the user equipment to measure the camped cell again based on the first configuration information and the second configuration information. The user equipment can report the measurement result without needing to switch to the RRC connected state, so that a requirement that the serving base station rapidly performs network configuration can be met.

### Embodiment 6

A difference between Embodiment 6 and Embodiment 5 lies in that after step S1204 in Embodiment 5, that is, after the serving base station triggers the user equipment context retrieve request (UE Context Retrieve Request) message, the anchor base station determines not to migrate the user equipment context, and triggers a user equipment context retrieve failure (UE Context Retrieve Failure) message.

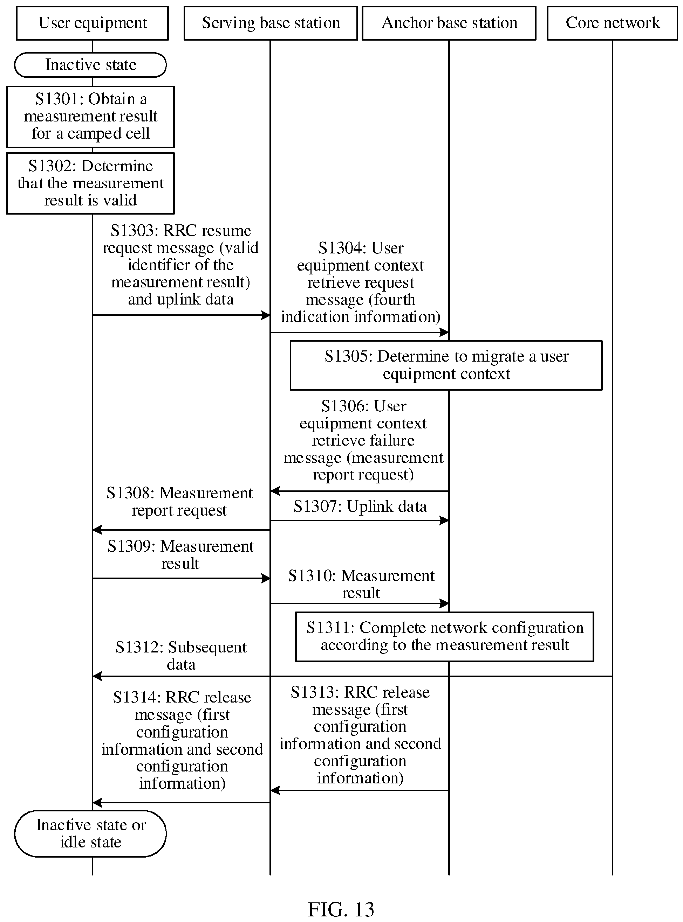

FIG. 13 is a diagram of information exchange of the network configuration method in Scenario 2. Refer to FIG. 13. The network configuration method may include the following steps.

S1301: User equipment obtains a measurement result for a camped cell.

The user equipment is in an RRC inactive state.

S1302: The user equipment determines that the measurement result is valid.

It may be understood that a specific implementation of steps S1301 and S1302 is the same as that of steps S601 and S602 shown in FIG. 6, and details are not described herein again.

S1303: The user equipment sends an RRC resume request (RRC Resume Request) message and uplink data (Uplink Data) to a serving base station.

The RRC resume request message is used to request to set up an SDT session. The RRC resume request message carries a valid identifier of the measurement result.

In some embodiments, the RRC resume request message may include the valid identifier of the measurement result. In other embodiments, the user equipment may alternatively send the valid identifier of the measurement result through a separate message.

S1304: The serving base station sends a user equipment context retrieve request (UE Context Retrieve Request) message to an anchor base station.

The user equipment context retrieve request message is used to request a user equipment context (UE Context) from the anchor base station. The user equipment context retrieve request message carries a fourth indication message, and the fourth indication message is used to indicate that a measurement result of the user equipment in the RRC inactive state or an idle state is valid.

S1305: The anchor base station determines whether to migrate a user equipment context (UE Context).

It should be noted that an embodiment shown in FIG. 13 is described by using an example in which the user equipment context is not to be migrated.

That the anchor base station does not migrate a user equipment context means that the anchor base station does not migrate all the context. The anchor base station still needs to transmit, to the serving base station, a partial user equipment context (Partial UE Context) required for information transmission between the serving base station and the user equipment.

It may be understood that the partial user equipment context may include a context (Context) of a radio link control (Radio Link Control, RLC) layer and a context (Context) of a media access control (Media Access Control, MAC) layer.

S1306: The anchor base station sends a user equipment context retrieve failure (UE Context Retrieve Failure) message to the serving base station.

The user equipment context retrieve failure message is used to notify the serving base station that all the user equipment context fails to be obtained. The user equipment context retrieve failure message may carry the partial user equipment context and a measurement report request.

S1307: The serving base station sends uplink data (Uplink Data) to the anchor base station.

S1308: The serving base station sends the measurement report request to the user equipment.

The measurement report request is used to request the user equipment to report the measurement result.

In some embodiments, the anchor base station sends the measurement report request to the serving base station, the serving base station does not parse the measurement report request from the anchor base station, and transparently forwards the measurement report request to the user equipment. Transparent forwarding means that information is not processed when the information is forwarded.

S1309: The user equipment sends the measurement result to the serving base station in response to the measurement report request.

S1310: The serving base station sends the measurement result to the anchor base station.

S1311: The anchor base station completes network configuration according to the measurement result.

It may be understood that a specific implementation of step S1311 is approximately the same as that of step S604 shown in FIG. 6. A difference lies in that the anchor base station performs network configuration, and details are not described herein again.

S1312: A core network sends subsequent data (Subsequent Data) to the user equipment.

It may be understood that the subsequent data from the core network may be forwarded sequentially by the anchor base station and the serving base station to the user equipment.

S1313: The anchor base station sends an RRC release (RRC Release) message to the serving base station.

The RRC release message is used to indicate to terminate the SDT session. The RRC release message carries first configuration information and second configuration information. The first configuration information is used to configure a measurement report. The second configuration information is used to configure a cell redirection and/or reselection parameter.

In some embodiments, the RRC release message may further carry a parameter that is used to modify a related cell group (Cell Group), such as adding or deleting a secondary cell group (Scell Group).

S1314: The serving base station sends an RRC release (RRC Release) message to the user equipment.

In this embodiment, the serving base station transparently forwards the RRC release message to the user equipment.

It may be understood that in this embodiment, when determining that the measurement result is valid, the user equipment sends the RRC resume request message to the serving base station. The RRC resume request message carries the valid identifier of the measurement result. After receiving the RRC resume request message, the serving base station sends the user equipment context retrieve request message to the anchor base station, to request the anchor base station to migrate the user equipment context. When determining not to migrate the user equipment context, the anchor base station sends the user equipment context retrieve failure message to the serving base station. The user equipment context retrieve failure message carries the partial user equipment context. After receiving the user equipment context retrieve failure message, the serving base station sends the measurement report request to the user equipment. After receiving the measurement report request, the user equipment sends the measurement result to the serving base station. The serving base station transparently forwards the measurement result to the anchor base station. The anchor base station completes network configuration according to the measurement result, and sends the RRC release message to the serving base station. The RRC release message carries the first configuration information and the second configuration information. The serving base station transparently forwards the RRC release message to the user equipment, to indicate the user equipment to measure the camped cell again based on the first configuration information and the second configuration information. The user equipment can report the measurement result without needing to switch to the RRC connected state, so that a requirement that the anchor base station rapidly performs network configuration can be met.

### Embodiment 7

A difference between Embodiment 7 and Embodiment 5 lies in that in step S1203 in Embodiment 5, when the user equipment triggers the RRC resume request (RRC Resume Request) message, the RRC resume request message carries the measurement result, and the serving base station triggers the RRC resume (RRC Resume) message, to indicate the user equipment to switch to the RRC connected state.

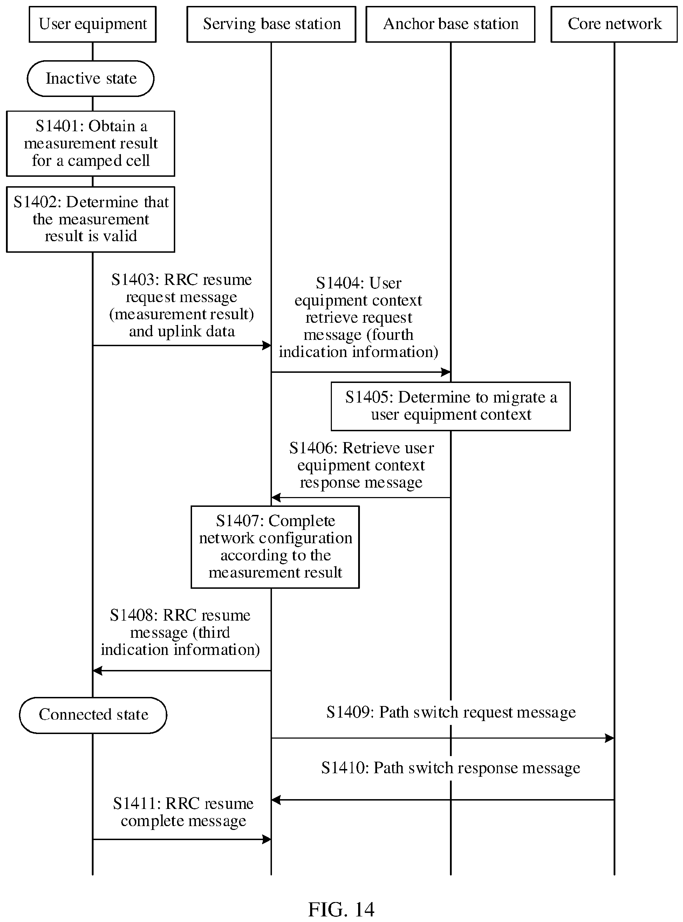

FIG. 14 is a diagram of information exchange of the network configuration method in Scenario 2. Refer to FIG. 14. The network configuration method may include the following steps.

S1401: User equipment obtains a measurement result for a camped cell.

The user equipment is in an RRC inactive state.

S1402: The user equipment determines that the measurement result is valid.

It may be understood that a specific implementation of steps S1401 and S1402 is the same as that of steps S601 and S602 shown in FIG. 6, and details are not described herein again.

S1403: The user equipment sends an RRC resume request (RRC Resume Request) message and uplink data (Uplink Data) to a serving base station.

The RRC resume request message is used to request to set up an SDT session. The RRC resume request message carries the measurement result. In other embodiments, the RRC resume request message may alternatively carry a measurement parameter, and the measurement parameter is used to indicate that the measurement result is valid. The measurement parameter may include a data amount and a quantity of pieces of measurement records.

In some embodiments, the RRC resume request message may include the measurement result. In other embodiments, the user equipment may alternatively send the measurement result through a separate message.

S1404: The serving base station sends a user equipment context retrieve request (UE Context Retrieve Request) message to an anchor base station.

The user equipment context retrieve request message is used to request a user equipment context (UE Context) from the anchor base station. The user equipment context retrieve request message carries a fourth indication message, and the fourth indication message is used to indicate that a measurement result of the user equipment in the RRC inactive state or an idle state is valid.

S1405: The anchor base station determines whether to migrate the user equipment context (UE Context).

It should be noted that an embodiment shown in FIG. 14 is described by using an example in which the user equipment context is to be migrated.

It may be understood that a specific implementation of step S1405 is the same as that of step S705 shown in FIG. 7, and details are not described herein again.

S1406: The anchor base station sends a user equipment context retrieve response (UE Context Retrieve Response) message to the serving base station.

The user equipment context retrieve response message carries the user equipment context (UE Context). In other embodiments, the user equipment context retrieve response message may further carry a measurement report request.

S1407: The serving base station completes network configuration according to the measurement result.

It may be understood that a specific implementation of step S1407 is the same as that of step S604 shown in FIG. 6, and details are not described herein again.

S1408: The serving base station sends an RRC resume (RRC Resume) message to the user equipment.

The RRC resume message is used to indicate the user equipment to switch to an RRC connected state. The RRC resume message carries third indication information. The third indication information is used to indicate a reason for the user equipment to switch to the RRC connected state, for example, performing a cell operation. The cell operation may include activating a secondary cell (Scell Activation), deleting a secondary cell (Scell Deleted), adding a secondary cell (Scells Added), or the like.

S1409: The serving base station sends a path switch request (Path Switch Request) message to a core network.

The path switch request message is used to request to switch a downlink endpoint to the serving base station.

S1410: The core network sends a path switch response (Path Switch Response) message to the serving base station in response to the path switch request.

The path switch response message is used to notify the serving base station that a downlink is switched.

S1411: The user equipment sends an RRC resume complete (RRC Resume Complete) message to the serving base station in response to the RRC resume message.

The RRC resume complete message is used to notify the serving base station that the user equipment has switched to the RRC connected state.

It may be understood that in this embodiment, when determining that the measurement result is valid, the user equipment sends the RRC resume request message to the serving base station. The RRC resume request message carries the measurement result. After receiving the RRC resume request message, the serving base station sends the user equipment context retrieve request message to the anchor base station, to request the anchor base station to migrate the user equipment context. When determining to migrate the user equipment context, the anchor base station sends the user equipment context retrieve response message to the serving base station. The user equipment context retrieve response message carries the user equipment context. After receiving the user equipment context retrieve response message, the serving base station completes network configuration according to the measurement result, and then sends the RRC resume message to the user equipment, to indicate the user equipment to switch to the RRC connected state. The RRC resume message carries the third indication information. After receiving the RRC resume message, the user equipment may perform a cell operation based on the third indication information, to synchronize a network configuration on a serving base station side, switch from the RRC inactive state to the RRC connected state, and then send the RRC resume complete message to the serving base station. The user equipment can report a valid measurement result during the RRC inactive state, and report the measurement result without needing to switch to an RRC connected state, so that a requirement that the serving base station rapidly performs network configuration can be met.

### Embodiment 8

A difference between Embodiment 8 and Embodiment 5 lies in that after step S1206 in Embodiment 5, that is, after the serving base station triggers the user equipment context retrieve response (UE Context Retrieve Response) message, the serving base station triggers the RRC resume (RRC Resume) message, to indicate the user equipment to switch to the RRC connected state.

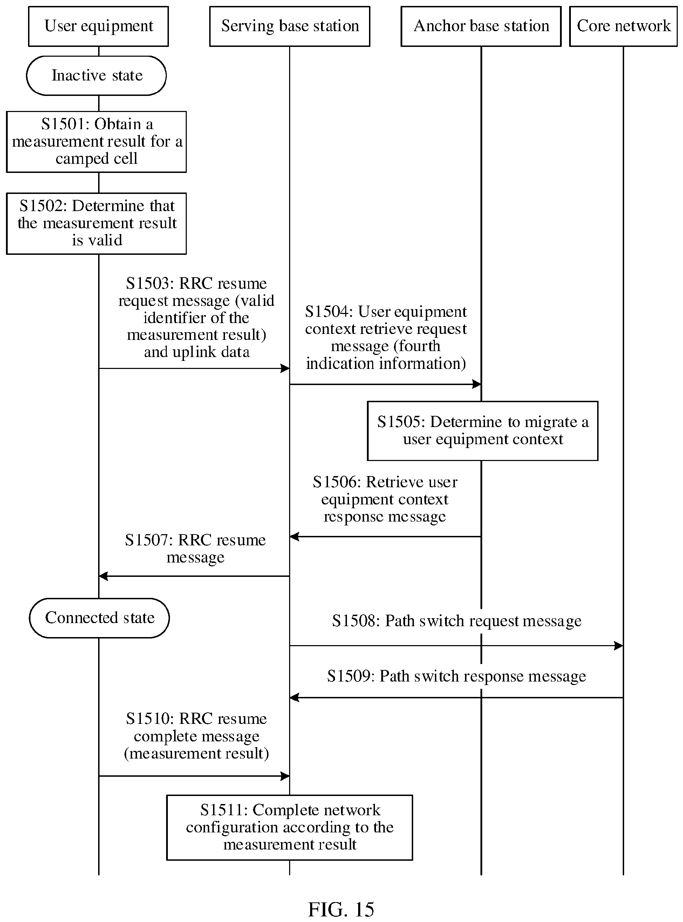

FIG. 15 is a diagram of information exchange of the network configuration method in Scenario 2. Refer to FIG. 15. The network configuration method may include the following steps.

S1501: User equipment obtains a measurement result for a camped cell.

The user equipment is in an RRC inactive state.

S1502: The user equipment determines that the measurement result is valid.

It may be understood that a specific implementation of steps S1501 and S1502 is the same as that of steps S601 and S602 shown in FIG. 6, and details are not described herein again.

S1503: The user equipment sends an RRC resume request (RRC Resume Request) message and uplink data (Uplink Data) to a serving base station.

The RRC resume request message is used to request to set up an SDT session. The RRC resume request message carries a valid identifier of the measurement result. In other embodiments, the RRC resume request message may alternatively carry a measurement parameter, and the measurement parameter is used to indicate that the measurement result is valid. The measurement parameter may include a data amount and a quantity of pieces of measurement records.

In some embodiments, the RRC resume request message may include the valid identifier of the measurement result. In other embodiments, the user equipment may alternatively send the valid identifier of the measurement result through a separate message.

S1504: The serving base station sends a user equipment context retrieve request (UE Context Retrieve Request) message to an anchor base station.

The user equipment context retrieve request message carries a fourth indication message, and the fourth indication message is used to indicate that a measurement result of the user equipment in the RRC inactive state or an idle state is valid. The fourth indication message may include the valid identifier of the measurement result, and a data amount and a quantity of pieces of measurement records.

S1505: The anchor base station determines whether to migrate the user equipment context (UE Context).

It should be noted that an embodiment shown in FIG. 15 is described by using an example in which the user equipment context is to be migrated.

It may be understood that a specific implementation of step S1505 is the same as that of step S705 shown in FIG. 7, and details are not described herein again.

S1506: The anchor base station sends a user equipment context retrieve response (UE Context Retrieve Response) message to the serving base station.

The user equipment context retrieve response message carries the user equipment context (UE Context). In other embodiments, the user equipment context retrieve response message may further carry a measurement report request.

S1507: The serving base station sends an RRC resume (RRC Resume) message to the user equipment.

The RRC resume message is used to indicate the user equipment to switch to an RRC connected state. In other embodiments, the RRC resume message may carry the measurement report request.

S1508: The serving base station sends a path switch request (Path Switch Request) message to a core network.

The path switch request message is used to request to switch a downlink endpoint to the serving base station.

S1509: The core network sends a path switch response (Path Switch Response) message to the serving base station in response to the path switch request.

The path switch response message is used to notify the serving base station that a downlink is switched.

S1510: The user equipment sends an RRC resume complete (RRC Resume Complete) message to the serving base station.

The RRC resume complete message is used to notify the serving base station that the user equipment has switched to the RRC connected state. The RRC resume complete message carries the measurement result. In other embodiments, the RRC resume complete message may alternatively carry a measurement parameter, and the measurement parameter is used to indicate that the measurement result is valid. The measurement parameter may include a data amount and a quantity of pieces of measurement records.

In some embodiments, the RRC resume complete message may include the measurement result. In other embodiments, the user equipment may alternatively send the measurement result through a separate message.

S1511: The serving base station completes network configuration according to the measurement result.

It may be understood that a specific implementation of step S1511 is the same as that of step S604 shown in FIG. 6, and details are not described herein again.

In this embodiment, when determining that the measurement result is valid, the user equipment sends the RRC resume request message to the serving base station. The RRC resume request message carries the valid identifier of the measurement result. After receiving the RRC resume request message, the serving base station sends the user equipment context retrieve request message to the anchor base station, to request the anchor base station to migrate the user equipment context. When determining to migrate the user equipment context, the anchor base station sends the user equipment context retrieve response message to the serving base station. The user equipment context retrieve response message carries the user equipment context. After receiving the user equipment context retrieve response message, the serving base station sends the RRC resume message to the user equipment, to indicate the user equipment to switch to the RRC connected state. After receiving the RRC resume message, the user equipment switches from the RRC inactive state to the RRC connected state, and then sends the RRC resume complete message to the serving base station. The RRC resume complete message carries the measurement result. After receiving the RRC resume complete message, the serving base station completes network configuration according to the measurement result. When transmitting the RRC resume complete message, the user equipment reports the measurement result together, so that a quantity of pieces of signaling between the user equipment and the serving base station can be reduced, a service delay can be reduced, and a requirement that the serving base station rapidly performs network configuration can be met.

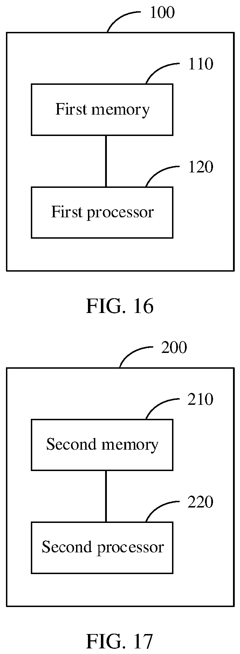

FIG. 16 is a diagram of a structure of a network device 100 according to an embodiment of this application.

The network device 100 may be a serving base station. Refer to FIG. 16. The network device 100 may include a first memory 110 and a first processor 120. The first memory 110 is configured to store a computer program or instructions. The first processor 120 may call the computer program or the instructions stored in the first memory 110, to perform all method steps in method embodiments on a serving base station side in embodiments of this application.

FIG. 17 is a diagram of a structure of a network device 200 according to an embodiment of this application.

The network device 200 may be an anchor base station. Refer to FIG. 17. The network device 200 may include a second memory 210 and a second processor 220. The second memory 210 is configured to store a computer program or instructions. The second processor 220 may call the computer program or the instructions stored in the second memory 210, to perform all method steps in method embodiments on an anchor base station side in embodiments of this application.

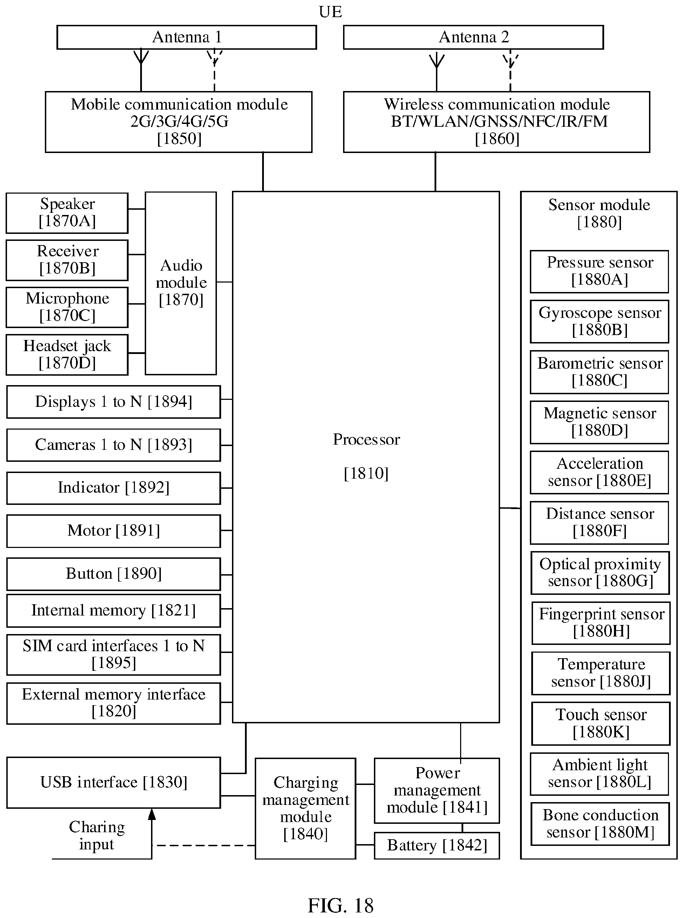

FIG. 18 is a diagram of a structure of user equipment according to an embodiment of this application.

In some embodiments, the structure of the user equipment (UE) may be shown in FIG. 18. The UE may include: a processor 1810, an external memory interface 1820, an internal memory 1821, a universal serial bus (universal serial bus, USB) interface 1830, a charging management module 1840, a power management unit 1841, a battery 1842, an antenna 1, an antenna 2, a mobile communication module 1850, a wireless communication module 1860, an audio module 1870, a speaker 1870A, a phone receiver 1870B, a microphone 1870C, a headset jack 1870D, a sensor module 1880, a key 1890, a motor 1891, an indicator 1892, a camera 1893, a display 1894, a subscriber identity module (subscriber identification module, SIM) card interface 1895, and the like. The sensor module 1880 may include a pressure sensor 1880A, a gyroscope sensor 1880B, a barometric pressure sensor 1880C, a magnetic sensor 1880D, an acceleration sensor 1880E, a distance sensor 1880F, an optical proximity sensor 1880G, a fingerprint sensor 1880H, a temperature sensor 1880J, a touch sensor 1880K, an ambient light sensor 1880L, a bone conduction sensor 1880M, and the like.

It may be understood that the structure illustrated in this embodiment does not constitute a specific limitation on the UE. In other embodiments, the UE may include more or fewer components than those shown in the figure, or some components may be combined, or some components may be split, or components are arranged in different manners. The components shown in the figure may be implemented by hardware, software, or a combination of software and hardware.

The processor 1810 may include one or more processing units, for example, the processor 1810 may include an application processor (application processor, AP), a Modem, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be separate devices, or may be integrated into one or more processors.

The charging management module 1840 is configured to receive a charging input from the charger. The charger may be a wireless charger or a wired charger.

The power management module 1841 is configured to be connected to the battery 1842, the charging management module 1840, and the processor 1810. The power management module 1841 receives an input of the battery 1842 and/or the charging management module 1840, to supply power to the processor 1810, the internal memory 1871, the display 1894, the camera 1893, the wireless communication module 1860, and the like.

A wireless communication function of the UE may be implemented by using the antenna 1, the antenna 2, the mobile communication module 1850, the wireless communication module 1860, the modem, the baseband processor, and the like.

The antenna 1 and the antenna 2 are configured to transmit and receive an electromagnetic wave signal. Each antenna in the UE may be configured to cover one or more communication frequency bands. Different antennas may be further multiplexed, to improve antenna utilization.

The mobile communication module 1850 can provide a solution for wireless communication including 2G/3G/4G/5G and the like to be applied to the UE.

The wireless communication module 1860 may provide a solution for wireless communication including a wireless local area network (wireless local area network, WLAN) (such as a wireless fidelity (wireless fidelity, Wi-Fi) network), Bluetooth (Bluetooth, BT), and a global navigation satellite system (global navigation satellite system, GNSS), frequency modulation (frequency modulation, FM), a near field communication (near field communication, NFC) technology, an infrared (infrared, IR) technology, and the like to be applied to the UE. The wireless communication module 1860 may be one or more components that integrate at least one communication processing module. The wireless communication module 1860 receives an electromagnetic wave through the antenna 2, performs frequency modulation and filtering processing on the electromagnetic wave signal, and sends the processed signal to the processor 1810. The wireless communication module 1860 may also receive a to-be-sent signal from the processor 1810, perform frequency modulation and amplification on the to-be-sent signal, and convert the signal into an electromagnetic wave for radiation through the antenna 2.

In this embodiment of this application, the wireless communication module 1860 may be used by the UE to send a request for resuming an RRC connection to a network node, and receive a response message of the network node.

The UE implements a display function by using the GPU, the display 1894, the application processor, and the like. The GPU is a microprocessor for image processing, and is connected to the display 1894 and the application processor.

The display 1894 is configured to display an image, a video, and the like. A series of graphical user interfaces (graphical user interface, GUI) may be displayed on the display 1894 of the UE.

The UE may implement a photographing function by using the ISP, the camera 1893, the video codec, the GPU, the display 1894, the AP, and the like.

The camera 1893 is configured to capture a still image or video.

The external memory interface 1820 may be configured to connect to an external storage card such as a micro SD card, to extend a storage capability of the UE.

The internal memory 1821 may be configured to store computer executable program code. The executable program code includes instructions. The processor 1810 runs the instruction stored in the internal memory 1821, to perform various function applications and data processing of the UE.

The UE can implement an audio function, for example, music playing and recording, by using the audio module 1870, the speaker 1870A, the phone receiver 1870B, the microphone 1870C, the headset interface 1870D, the application processor, and the like. The UE may further include the pressure sensor 1880A, the barometric pressure sensor 1880C, the gyroscope sensor 1880B, the magnetic sensor 1880D, the acceleration sensor 1880E, the distance sensor 1880F, the optical proximity sensor 1880G, the ambient light sensor 1880L, the fingerprint sensor 1880H, the temperature sensor 1880J, the touch sensor 1880K, the bone conduction sensor 1880M, the button 1890, the motor 1891, the indicator 1892, and the like.

The SIM card interface 1895 is configured to connect a SIM card. The SIM card may be inserted into the SIM card interface 1895 or plugged from the SIM card interface 1895, to implement contact with or separation from the UE. The UE may support one or N SIM card interfaces, where N is a positive integer greater than 1. The SIM card interface 1895 may support a Nano SIM card, a Micro SIM card, a SIM card, and the like. A plurality of cards may be inserted into a same SIM card interface 1895 at the same time. The SIM card interface 1895 may also be compatible with an external memory card. The UE interacts with a network through the SIM card, to implement functions such as a call and data communication.

In addition, an operating system is run on the components, for example, a Harmony operating system, an iOS operating system, an Android operating system, or a Windows operating system. An application may be installed and run on the operating system. In other embodiments, a plurality of operating systems may be run in the UE.

It should be understood that the hardware modules included in the UE shown in FIG. 18 are only example descriptions, and do not constitute a limitation on the specific structure of the UE. In fact, the UE provided in embodiments of this application may further include other hardware modules that have an interaction relationship with the hardware modules shown in the figure, and the other hardware modules are not specifically limited herein. For example, the UE may further include a flash and a micro projection apparatus. For another example, if the UE is a PC, the UE may further include components such as a keyboard and a mouse.

It may be understood that the user equipment shown in FIG. 18 may implement all method steps in method embodiments on a user equipment side in embodiments of this application.

An embodiment of this application further provides a computer storage medium, configured to store a computer program or instructions. When the computer program or the instructions are executed by a processor, the network configuration method in embodiments of this application is implemented. The same method steps and beneficial effects are not described herein again.

Embodiments of this application are described in detail with reference to the accompanying drawings. However, this application is not limited to the foregoing embodiments, and a person of ordinary skill in the art may make various changes without departing from the objectives of this application within a knowledge range.

## Claims

1. A network configuration method, applied to a serving base station (100), wherein the method comprises:
receiving (S603, S703, S807, S1203, S1303) a radio resource control, RRC, connection message from user equipment, wherein the user equipment is in an RRC inactive state, the RRC connection message is used to request to set up an RRC connection between the user equipment and the serving base station (100), the RRC connection message carries a measurement configuration parameter, and the measurement configuration parameter is used to indicate the serving base station (100) or an anchor base station (200) to complete network configuration;
sending (S704, S1204, S1304) a user equipment context retrieve request message to the anchor base station (200), wherein the user equipment context retrieve request message is used to request a user equipment context;
if the anchor base station (200) determines (S705, S1205, S1305) to migrate the user equipment context, receiving (S706, S1206) a user equipment context retrieve response message from the anchor base station (200), wherein the user equipment context retrieve response message carries the user equipment context; and
completing (S604, S707, S808) network configuration according to the measurement configuration parameter, or sending the measurement configuration parameter to the anchor base station (200); and,
the user equipment context retrieve request message carries fourth indication message, and the fourth indication message is used to indicate that a measurement result of the user equipment is valid; and
the user equipment context retrieve response message further carries a measurement report request, and the measurement report request is used to request (S1207) the user equipment to report the measurement result.

2. The network configuration method according to claim 1, wherein the measurement configuration parameter comprises a valid identifier of the measurement result or the measurement result, and the valid identifier of the measurement result is used to notify the serving base station (100) that the measurement result is valid.

3. The network configuration method according to any one of claim 1 or 2, wherein the RRC connection message comprises any one of the following: an RRC resume request message, an RRC setup request message, an RRC reestablishment request message, an RRC resume complete message, an RRC setup complete message, and an RRC reestablishment complete message.

4. The network configuration method according to any one of claims 1 to 3, wherein the receiving an RRC connection message from user equipment comprises:
receiving an RRC resume request message from the user equipment, wherein the RRC resume request message is used to request to set up a small data transmission, SDT, session, and the RRC resume request message carries the valid identifier of the measurement result; and
after the receiving an RRC resume request message from the user equipment, the method further comprises:
sending an RRC release message to the user equipment, wherein the RRC release message is used to indicate to terminate the SDT session, wherein
the RRC release message carries first configuration information and second configuration information, the first configuration information is used to configure a measurement report, and the second configuration information is used to configure a cell redirection and/or reselection parameter.

5. The network configuration method according to any one of claims 1 to 4, wherein the receiving an RRC connection message from user equipment comprises:
receiving an RRC resume request message from the user equipment, wherein the RRC resume request message is used to request to set up an SDT session, and the RRC resume request message carries the measurement result; and
after the receiving an RRC resume request message from the user equipment, the method further comprises:
sending an RRC resume message to the user equipment, wherein the RRC resume message is used to indicate the user equipment to switch to an RRC connected state, the RRC resume message carries third indication information, and the third indication information is used to indicate a reason for the user equipment to switch to the RRC connected state.

6. The network configuration method according to any one of claims 1 to 5, wherein the receiving an RRC connection message from user equipment comprises:
receiving an RRC resume request message from the user equipment, wherein the RRC resume request message is used to request to set up an SDT session, and the RRC resume request message carries the valid identifier of the measurement result; and
after the receiving an RRC resume request message from the user equipment, the method further comprises:
sending an RRC resume message to the user equipment, wherein the RRC resume message is used to indicate the user equipment to switch to an RRC connected state; and
receiving an RRC resume complete message from the user equipment, wherein the RRC resume complete message is used to notify the serving base station (100) that the user equipment has switched to the RRC connected state, the RRC resume complete message carries a measurement result, and the measurement result is used to indicate the serving base station (100) to complete network configuration.

7. The network configuration method according to any one of claims 1 to 3, further comprising:
if the anchor base station (200) determines not to migrate the user equipment context, receiving a user equipment context retrieve failure message from the anchor base station (200), wherein the user equipment context retrieve failure message is used to notify the serving base station (100) that all the user equipment context fails to be obtained, the user equipment context retrieve failure message carries a partial user equipment context and a measurement report request, and the measurement report request is used to request the user equipment to report the measurement result;
sending the measurement report request to the user equipment;
receiving the measurement result from the user equipment; and
sending the measurement result to the anchor base station (200), wherein the measurement result is used to indicate the anchor base station (200) to complete network configuration.

8. A network configuration method, applied to an anchor base station (200), wherein the method comprises:
receiving (S704, S1204, S1304) a user equipment context retrieve request message from a serving base station (100), wherein the user equipment context retrieve request message is used to request a user equipment context, the user equipment context retrieve request message carries fourth indication information, the fourth indication message is used to indicate that a measurement result of user equipment is valid, and the user equipment is in a radio resource control, RRC, inactive state;
determining (S705, S1205, S1305) whether to migrate the user equipment context;
sending (S706, S1206) a user equipment context retrieve response message to the serving base station (100) if it is determined to migrate the user equipment context, wherein the user equipment context retrieve response message carries the user equipment context and a measurement report request, and the measurement report request is used to request the user equipment to report the measurement result;
receiving (S1310) the measurement result from the serving base station (100); and
completing (S1311) network configuration according to the measurement result.

9. The network configuration method according to claim 8, wherein the method further comprises:
if it is determined not to migrate the user equipment context, sending a user equipment context retrieve failure message to the serving base station (100), wherein the user equipment context retrieve failure message is used to notify the serving base station (100) that all the user equipment context fails to be obtained, the user equipment context retrieve failure message carries a partial user equipment context and a measurement report request, and the measurement report request is used to request the user equipment to report the measurement result;
receiving the measurement result from the serving base station (100); and
completing network configuration according to the measurement result.

10. A network device, wherein the network device comprises a memory and a processor, the processor is configured to call a computer program or code stored in the memory, to perform the network configuration method according to any one of claims 1 to 9.

11. A computer storage medium, configured to store a computer program or instructions, wherein when the computer program or instructions are executed by a processor, the network configuration method according to any one of claims 1 to 9 is implemented.

## Patentansprüche

1. Netzwerkkonfigurationsverfahren, angewendet auf eine versorgende Basisstation (100), wobei das Verfahren umfasst:
Empfangen (S603, S703, S807, S1203, S1303) einer Funkressourcensteuerungs-Verbindungsnachricht (RRC-Verbindungsnachricht) von einem Benutzergerät, wobei sich das Benutzergerät in einem inaktiven RRC-Zustand befindet, die RRC-Verbindungsnachricht verwendet wird, um den Aufbau einer RRC-Verbindung zwischen dem Benutzergerät und der versorgenden Basisstation (100) anzufordern, die RRC-Verbindungsnachricht einen Messkonfigurationsparameter trägt und der Messkonfigurationsparameter verwendet wird, um der versorgenden Basisstation (100) oder einer Anker-Basisstation (200) anzuzeigen, eine Netzwerkkonfiguration abzuschließen;
Senden (S704, S1204, S1304) einer Abrufanforderungsnachricht für einen Benutzergerätkontext an die Anker-Basisstation (200), wobei die Abrufanforderungsnachricht für den Benutzergerätkontext verwendet wird, um einen Benutzergerätkontext anzufordern;
falls die Anker-Basisstation (200) bestimmt (S705, S1205, S1305), den Benutzergerätkontext zu migrieren, Empfangen (S706, S1206) einer Abrufantwortnachricht für den Benutzergerätkontext von der Anker-Basisstation (200), wobei die Abrufantwortnachricht für den Benutzergerätkontext den Benutzergerätkontext trägt; und
Abschließen (S604, S707, S808) der Netzwerkkonfiguration gemäß dem Messkonfigurationsparameter oder Senden des Messkonfigurationsparameters an die Anker-Basisstation (200); und,
die Abrufanforderungsnachricht für den Benutzergerätkontext eine vierte Anzeige-Nachricht trägt, und die vierte Anzeige-Nachricht verwendet wird, um anzuzeigen, dass ein Messergebnis des Benutzergeräts gültig ist; und
die Abrufantwortnachricht für den Benutzergerätkontext ferner eine Messberichtsanforderung trägt, und die Messberichtsanforderung verwendet wird, um das Benutzergerät aufzufordern (S 1207), das Messergebnis zu melden.

2. Netzwerkkonfigurationsverfahren nach Anspruch 1, wobei der Messkonfigurationsparameter eine Gültigkeitskennung des Messergebnisses oder das Messergebnis umfasst, und die Gültigkeitskennung des Messergebnisses verwendet wird, um die versorgende Basisstation (100) zu benachrichtigen, dass das Messergebnis gültig ist.

3. Netzwerkkonfigurationsverfahren nach einem der Ansprüche 1 oder 2, wobei die RRC-Verbindungsnachricht eines der Folgenden umfasst: eine RRC-Wiederaufnahme-Anforderungsnachricht, eine RRC-Einrichtungs-Anforderungsnachricht, eine RRC-Wiederherstellungs-Anforderungsnachricht, eine RRC-Wiederaufnahme-Abschlussnachricht, eine RRC-Einrichtungs-Abschlussnachricht und eine RRC-Wiederherstellungs-Abschlussnachricht.

4. Netzwerkkonfigurationsverfahren nach einem der Ansprüche 1 bis 3, wobei das Empfangen einer RRC-Verbindungsnachricht von einem Benutzergerät umfasst:
Empfangen einer RRC-Wiederaufnahme-Anforderungsnachricht von dem Benutzergerät, wobei die RRC-Wiederaufnahme-Anforderungsnachricht verwendet wird, um den Aufbau einer Sitzung zur kleinen Datenübertragung, SDT (Small Data Transmission), anzufordern, und die RRC-Wiederaufnahme-Anforderungsnachricht die gültige Kennung des Messergebnisses trägt; und
nach dem Empfangen einer RRC-Wiederaufnahme-Anforderungsnachricht von dem Benutzergerät umfasst das Verfahren ferner:
Senden einer RRC-Freigabenachricht an das Benutzergerät, wobei die RRC-Freigabenachricht verwendet wird, um anzuzeigen, dass die SDT-Sitzung zu beenden ist, wobei
die RRC-Freigabenachricht erste Konfigurationsinformationen und zweite Konfigurationsinformationen trägt, wobei die ersten Konfigurationsinformationen verwendet werden, um einen Messbericht zu konfigurieren, und die zweiten Konfigurationsinformationen verwendet werden, um einen Zellumleitungs- und/oder Neuauswahlparameter zu konfigurieren.

5. Netzwerkkonfigurationsverfahren nach einem der Ansprüche 1 bis 4, wobei das Empfangen einer RRC-Verbindungsnachricht von einem Benutzergerät umfasst:
Empfangen einer RRC-Wiederaufnahme-Anforderungsnachricht von dem Benutzergerät, wobei die RRC-Wiederaufnahme-Anforderungsnachricht verwendet wird, um den Aufbau einer SDT-Sitzung anzufordern, und die RRC-Wiederaufnahme-Anforderungsnachricht das Messergebnis trägt; und
nach dem Empfangen einer RRC-Wiederaufnahme-Anforderungsnachricht von dem Benutzergerät umfasst das Verfahren ferner:
Senden einer RRC-Wiederaufnahmenachricht an das Benutzergerät, wobei die RRC-Wiederaufnahmenachricht verwendet wird, um dem Benutzergerät anzuzeigen, in einen RRC-verbundenen Zustand zu wechseln, wobei die RRC-Wiederaufnahmenachricht dritte Anzeigeinformationen trägt und die dritten Anzeigeinformationen verwendet werden, um einen Grund für das Wechseln des Benutzergeräts in den RRC-verbundenen Zustand anzuzeigen.

6. Netzwerkkonfigurationsverfahren nach einem der Ansprüche 1 bis 5, wobei das Empfangen einer RRC-Verbindungsnachricht von einem Benutzergerät umfasst:
Empfangen einer RRC-Wiederaufnahme-Anforderungsnachricht von dem Benutzergerät, wobei die RRC-Wiederaufnahme-Anforderungsnachricht verwendet wird, um den Aufbau einer SDT-Sitzung anzufordern, und die RRC-Wiederaufnahme-Anforderungsnachricht die gültige Kennung des Messergebnisses trägt; und
nach dem Empfangen einer RRC-Wiederaufnahme-Anforderungsnachricht von dem Benutzergerät umfasst das Verfahren ferner:
Senden einer RRC-Wiederaufnahmenachricht an das Benutzergerät, wobei die RRC-Wiederaufnahmenachricht verwendet wird, um dem Benutzergerät anzuzeigen, in einen RRC-verbundenen Zustand zu wechseln; und
Empfangen einer RRC-Resume-Complete-Nachricht von dem Benutzergerät, wobei die RRC-Resume-Complete-Nachricht verwendet wird, um der versorgenden Basisstation (100) mitzuteilen, dass das Benutzergerät in den RRC-Connected-Zustand gewechselt ist, wobei die RRC-Resume-Complete-Nachricht ein Messergebnis trägt und das Messergebnis verwendet wird, um der versorgenden Basisstation (100) anzuzeigen, die Netzwerkkonfiguration abzuschließen.

7. Netzwerkkonfigurationsverfahren nach einem der Ansprüche 1 bis 3, ferner umfassend:
wenn die Anker-Basisstation (200) bestimmt, den Benutzergerätekontext nicht zu migrieren, Empfangen einer Benutzergerätekontext-Abruffehlernachricht von der Anker-Basisstation (200), wobei die Benutzergerätekontext-Abruffehlernachricht verwendet wird, um der versorgenden Basisstation (100) mitzuteilen, dass der gesamte Benutzergerätekontext nicht erhalten werden konnte, wobei die Benutzergerätekontext-Abruffehlernachricht einen Teil-Benutzergerätekontext und eine Messberichtsaufforderung trägt und die Messberichtsaufforderung verwendet wird, um das Benutzergerät aufzufordern, das Messergebnis zu melden;
Senden der Messberichtsaufforderung an das Benutzergerät;
Empfangen des Messergebnisses von dem Benutzergerät; und
Senden des Messergebnisses an die Anker-Basisstation (200), wobei das Messergebnis verwendet wird, um der Anker-Basisstation (200) anzuzeigen, die Netzwerkkonfiguration abzuschließen.

8. Netzwerkkonfigurationsverfahren, angewendet auf eine Anker-Basisstation (200), wobei das Verfahren umfasst:
Empfangen (S704, S1204, S1304) einer Benutzergerätekontext-Abrufanforderungsnachricht von einer versorgenden Basisstation (100), wobei die Benutzergerätekontext-Abrufanforderungsnachricht verwendet wird, um einen Benutzergerätekontext anzufordern, wobei die Benutzergerätekontext-Abrufanforderungsnachricht vierte Anzeigeinformationen trägt, wobei die vierte Anzeigenachricht verwendet wird, um anzuzeigen, dass ein Messergebnis eines Benutzergeräts gültig ist, und das Benutzergerät in einem Radio Resource Control (RRC) Inactive-Zustand ist;
Bestimmen (S705, S1205, S1305), ob der Benutzergerätekontext migriert werden soll;
Senden (S706, S1206) einer Benutzergerätekontext-Abrufantwortnachricht an die versorgende Basisstation (100), falls bestimmt wird, den Benutzergerätekontext zu migrieren, wobei die Benutzergerätekontext-Abrufantwortnachricht den Benutzergerätekontext und eine Messberichtsaufforderung trägt und die Messberichtsaufforderung verwendet wird, um das Benutzergerät aufzufordern, das Messergebnis zu melden;
Empfangen (S1310) des Messergebnisses von der versorgenden Basisstation (100);
und
Abschließen (S1311) der Netzwerkkonfiguration gemäß dem Messergebnis.

9. Das Netzwerkkonfigurationsverfahren gemäß Anspruch 8, wobei das Verfahren ferner umfasst:
wenn bestimmt wird, den Benutzergerätekontext nicht zu migrieren, Senden einer Benutzergerätekontext-Abruffehlernachricht an die versorgende Basisstation (100), wobei die Benutzergerätekontext-Abruffehlernachricht verwendet wird, um die versorgende Basisstation (100) darüber zu benachrichtigen, dass der gesamte Benutzergerätekontext nicht erhalten werden kann, wobei die Benutzergerätekontext-Abruffehlernachricht einen Teil-Benutzergerätekontext und eine Messberichtsanforderung enthält, und die Messberichtsanforderung verwendet wird, um das Benutzergerät aufzufordern, das Messergebnis zu melden;
Empfangen des Messergebnisses von der versorgenden Basisstation (100); und
Abschließen der Netzwerkkonfiguration gemäß dem Messergebnis.

10. Eine Netzwerkvorrichtung, wobei die Netzwerkvorrichtung einen Speicher und einen Prozessor umfasst, wobei der Prozessor konfiguriert ist, um ein im Speicher gespeichertes Computerprogramm oder einen Code aufzurufen, um das Netzwerkkonfigurationsverfahren gemäß einem der Ansprüche 1 bis 9 durchzuführen.

11. Ein Computer-Speichermedium, das konfiguriert ist, um ein Computerprogramm oder Anweisungen zu speichern, wobei, wenn das Computerprogramm oder die Anweisungen von einem Prozessor ausgeführt werden, das Netzwerkkonfigurationsverfahren gemäß einem der Ansprüche 1 bis 9 implementiert wird.

## Revendications

1. Procédé de configuration de réseau, appliqué à une station de base de desserte (100), dans lequel le procédé comprend :
la réception (S603, S703, S807, S1203, S1303) d'un message de connexion de commande de ressources radio, RRC, en provenance d'un équipement d'utilisateur, l'équipement d'utilisateur étant dans un état RRC inactif, le message de connexion RRC étant utilisé pour demander l'établissement d'une connexion RRC entre l'équipement d'utilisateur et la station de base de desserte (100), le message de connexion RRC transportant un paramètre de configuration de mesure, et le paramètre de configuration de mesure étant utilisé pour indiquer à la station de base de desserte (100) ou à une station de base d'ancrage (200) d'achever la configuration de réseau ;
l'envoi (S704, S1204, S1304) d'un message de requête de récupération de contexte d'équipement d'utilisateur à la station de base d'ancrage (200), le message de requête de récupération de contexte d'équipement d'utilisateur étant utilisé pour demander un contexte d'équipement d'utilisateur ;
si la station de base d'ancrage (200) détermine (S705, S1205, S1305) de migrer le contexte d'équipement d'utilisateur, la réception (S706, S1206) d'un message de réponse de récupération de contexte d'équipement d'utilisateur en provenance de la station de base d'ancrage (200), le message de réponse de récupération de contexte d'équipement d'utilisateur transportant le contexte d'équipement d'utilisateur ; et
l'achevement (S604, S707, S808) de la configuration de réseau selon le paramètre de configuration de mesure, ou l'envoi du paramètre de configuration de mesure à la station de base d'ancrage (200) ; et,
le message de requête de récupération de contexte d'équipement d'utilisateur transporte un quatrième message d'indication, et le quatrième message d'indication est utilisé pour indiquer qu'un résultat de mesure de l'équipement d'utilisateur est valide ; et
le message de réponse de récupération de contexte d'équipement d'utilisateur transporte en outre une requête de rapport de mesure, et la requête de rapport de mesure est utilisée pour demander (S1207) à l'équipement d'utilisateur de rapporter le résultat de mesure.

2. Procédé de configuration de réseau selon la revendication 1, dans lequel le paramètre de configuration de mesure comprend un identifiant de validité du résultat de mesure ou le résultat de mesure, et l'identifiant de validité du résultat de mesure est utilisé pour notifier à la station de base de desserte (100) que le résultat de mesure est valide.

3. Procédé de configuration de réseau selon l'une quelconque des revendications 1 ou 2, dans lequel le message de connexion RRC comprend l'un quelconque des éléments suivants : un message de requête de reprise RRC, un message de requête d'établissement RRC, un message de requête de rétablissement RRC, un message de reprise RRC achevée, un message d'établissement RRC achevé, et un message de rétablissement RRC achevé.

4. Procédé de configuration de réseau selon l'une quelconque des revendications 1 à 3, dans lequel la réception d'un message de connexion RRC en provenance d'un équipement d'utilisateur comprend :
la réception d'un message de demande de reprise RRC en provenance de l'équipement utilisateur, dans lequel le message de demande de reprise RRC est utilisé pour demander l'établissement d'une session de transmission de données de petite taille, SDT, et le message de demande de reprise RRC transporte l'identifiant valide du résultat de mesure ; et
après la réception d'un message de demande de reprise RRC en provenance de l'équipement utilisateur, le procédé comprend en outre :
l'envoi d'un message de libération RRC à l'équipement utilisateur, dans lequel le message de libération RRC est utilisé pour indiquer de mettre fin à la session SDT, dans lequel
le message de libération RRC transporte une première information de configuration et une deuxième information de configuration, la première information de configuration est utilisée pour configurer un rapport de mesure, et la deuxième information de configuration est utilisée pour configurer un paramètre de redirection et/ou de resélection de cellule.

5. Procédé de configuration de réseau selon l'une quelconque des revendications 1 à 4, dans lequel la réception d'un message de connexion RRC en provenance de l'équipement utilisateur comprend :
la réception d'un message de demande de reprise RRC en provenance de l'équipement utilisateur, dans lequel le message de demande de reprise RRC est utilisé pour demander l'établissement d'une session SDT, et le message de demande de reprise RRC transporte le résultat de mesure ; et
après la réception d'un message de demande de reprise RRC en provenance de l'équipement utilisateur, le procédé comprend en outre :
l'envoi d'un message de reprise RRC à l'équipement utilisateur, dans lequel le message de reprise RRC est utilisé pour indiquer à l'équipement utilisateur de passer à un état connecté RRC, le message de reprise RRC transporte une troisième information d'indication, et la troisième information d'indication est utilisée pour indiquer une raison pour laquelle l'équipement utilisateur passe à l'état connecté RRC.

6. Procédé de configuration de réseau selon l'une quelconque des revendications 1 à 5, dans lequel la réception d'un message de connexion RRC en provenance de l'équipement utilisateur comprend :
la réception d'un message de demande de reprise RRC en provenance de l'équipement utilisateur, dans lequel le message de demande de reprise RRC est utilisé pour demander l'établissement d'une session SDT, et le message de demande de reprise RRC transporte l'identifiant valide du résultat de mesure ; et
après la réception d'un message de demande de reprise RRC en provenance de l'équipement utilisateur, le procédé comprend en outre :
l'envoi d'un message de reprise RRC à l'équipement utilisateur, dans lequel le message de reprise RRC est utilisé pour indiquer à l'équipement utilisateur de passer à un état connecté RRC ; et
la réception d'un message de fin de reprise RRC en provenance de l'équipement utilisateur, dans lequel le message de fin de reprise RRC est utilisé pour notifier à la station de base de desserte (100) que l'équipement utilisateur est passé à l'état RRC connecté, le message de fin de reprise RRC transporte un résultat de mesure, et le résultat de mesure est utilisé pour indiquer à la station de base de desserte (100) d'achever la configuration réseau.

7. Procédé de configuration réseau selon l'une quelconque des revendications 1 à 3, comprenant en outre :
si la station de base d'ancrage (200) détermine de ne pas migrer le contexte d'équipement utilisateur, la réception d'un message d'échec de récupération de contexte d'équipement utilisateur en provenance de la station de base d'ancrage (200), dans lequel le message d'échec de récupération de contexte d'équipement utilisateur est utilisé pour notifier à la station de base de desserte (100) que la totalité du contexte d'équipement utilisateur n'a pas pu être obtenue, le message d'échec de récupération de contexte d'équipement utilisateur transporte un contexte d'équipement utilisateur partiel et une requête de rapport de mesure, et la requête de rapport de mesure est utilisée pour demander à l'équipement utilisateur de rapporter le résultat de mesure ;
l'envoi de la requête de rapport de mesure à l'équipement utilisateur ;
la réception du résultat de mesure en provenance de l'équipement utilisateur ; et
l'envoi du résultat de mesure à la station de base d'ancrage (200), dans lequel le résultat de mesure est utilisé pour indiquer à la station de base d'ancrage (200) d'achever la configuration réseau.

8. Procédé de configuration réseau, appliqué à une station de base d'ancrage (200), le procédé comprenant :
la réception (S704, S1204, S1304) d'un message de requête de récupération de contexte d'équipement utilisateur en provenance d'une station de base de desserte (100), dans lequel le message de requête de récupération de contexte d'équipement utilisateur est utilisé pour demander un contexte d'équipement utilisateur, le message de requête de récupération de contexte d'équipement utilisateur transporte des quatrièmes informations d'indication, le quatrième message d'indication est utilisé pour indiquer qu'un résultat de mesure d'équipement utilisateur est valide, et l'équipement utilisateur est dans un état inactif de contrôle de ressources radio, RRC ;
la détermination (S705, S1205, S1305) s'il faut migrer le contexte d'équipement utilisateur ;
l'envoi (S706, S1206) d'un message de réponse de récupération de contexte d'équipement utilisateur à la station de base de desserte (100) s'il est déterminé de migrer le contexte d'équipement utilisateur, dans lequel le message de réponse de récupération de contexte d'équipement utilisateur transporte le contexte d'équipement utilisateur et une requête de rapport de mesure, et la requête de rapport de mesure est utilisée pour demander à l'équipement utilisateur de rapporter le résultat de mesure ;
la réception (S1310) du résultat de mesure en provenance de la station de base de desserte (100) ; et
l'achèvement (S1311) de la configuration réseau selon le résultat de mesure.

9. Procédé de configuration de réseau selon la revendication 8, dans lequel le procédé comprend en outre :
s'il est déterminé de ne pas migrer le contexte d'équipement utilisateur, l'envoi d'un message d'échec de récupération de contexte d'équipement utilisateur à la station de base de desserte (100), dans lequel le message d'échec de récupération de contexte d'équipement utilisateur est utilisé pour notifier à la station de base de desserte (100) que la totalité du contexte d'équipement utilisateur n'a pas pu être obtenue, le message d'échec de récupération de contexte d'équipement utilisateur transporte un contexte d'équipement utilisateur partiel et une requête de rapport de mesure, et la requête de rapport de mesure est utilisée pour demander à l'équipement utilisateur de rapporter le résultat de mesure ;
la réception du résultat de mesure en provenance de la station de base de desserte (100) ;
et
la réalisation d'une configuration de réseau selon le résultat de mesure.

10. Dispositif de réseau, dans lequel le dispositif de réseau comprend une mémoire et un processeur, le processeur est configuré pour appeler un programme ou un code informatique stocké dans la mémoire, pour mettre en œuvre le procédé de configuration de réseau selon l'une quelconque des revendications 1 à 9.

11. Support de stockage informatique, configuré pour stocker un programme ou des instructions informatiques, dans lequel, lorsque le programme ou les instructions informatiques sont exécutés par un processeur, le procédé de configuration de réseau selon l'une quelconque des revendications 1 à 9 est mis en œuvre.
